# EUROPEAN PATENT SPECIFICATION

(11) **EP 3 591 197 B1**
(45) Date of publication and mention of the grant of the patent: **28.07.2021**
(21) Application number: 19182161.0
(22) Date of filing: 25.06.2019
(51) Int. Cl.: F02D 35/02, F02D 41/40, F02B 23/06

(54) **FUEL INJECTION CONTROL DEVICE AND FUEL INJECTION CONTROL METHOD FOR DIESEL ENGINE**
KRAFTSTOFFEINSPRITZSTEUERUNGSVORRICHTUNG UND KRAFTSTOFFEINSPRITZSTEUERUNGSVERFAHREN FÜR DIESELMOTOR
APPAREIL ET PROCÉDÉ DE RÉGLAGE D'INJECTION DE CARBURANT POUR UN MOTEUR DIESEL

(30) Priority: 06.07.2018 JP 2018128990
(43) Date of publication of application: 08.01.2020
(73) Proprietor: Mazda Motor Corporation, Aki-gun, Hiroshima 730-8670 (JP)
(72) Inventor: MATSUO, Takeru, Fuchu-cho, Aki-gun, Hiroshima 730-8670 (JP); KAKUDA, Yoshie, Fuchu-cho, Aki-gun, Hiroshima 730-8670 (JP); SHIRAHASHI, Naotoshi, Fuchu-cho, Aki-gun, Hiroshima 730-8670 (JP); KIM, Sangkyu, Fuchu-cho, Aki-gun, Hiroshima 730-8670 (JP); SHIMO, Daisuke, Fuchu-cho, Aki-gun, Hiroshima 730-8670 (JP); KATAOKA, Motoshi, Fuchu-cho, Aki-gun, Hiroshima 730-8670 (JP); YAMAMOTO, Takahiro, Fuchu-cho, Aki-gun, Hiroshima 730-8670 (JP)
(74) Representative: Müller-Boré & Partner Patentanwälte PartG mbB

(56) References cited:
- EP-A1- 2 685 075
- WO-A1-02/20956
- WO-A1-2011/142112
- WO-A1-2015/058907
- WO-A2-2015/110894
- JP-A- 2004 100 566
- JP-A- 2013 064 387
- JP-A- 2015 078 615
- JP-A- 2016 166 587
- JP-B2- 6 287 740
- US-A- 4 531 399
- US-A1- 2009 259 383
- US-A1- 2012 000 441
- US-A1- 2012 004 826
- US-A1- 2015 053 172
- TUNESTAL ET AL: "Self-tuning gross heat release computation for internal combustion engines", CONTROL ENGINEERING PRACTICE, PERGAMON PRESS, OXFORD, GB, vol. 17, no. 4, 1 April 2009 (2009-04-01), pages 518-524, XP025958725, ISSN: 0967-0661, DOI: 10.1016/J.CONENGPRAC.2008.09.012 [retrieved on 2008-11-06]

## Description

### TECHNICAL FIELD

The present invention relates to a fuel injection control device and a fuel injection control method for a diesel engine that performs fuel injection into a combustion chamber by pre-injection and post-injection during one cycle.

### BACKGROUND

A diesel engine that employs combustion by a premixed compression ignition system has an advantage, in which fuel economy is improved by shortening of a combustion period, but has problems, such as an increase in combustion noise and an increase in the amount of soot generated. For this reason, at present, combustion of the premixed compression ignition system is applied exclusively to low load operating range. There has been known a technique for performing a plurality of fuel injections into a combustion chamber in one cycle to suppress combustion noise and soot. For example, Japanese Patent No. 5873059 discloses a technique for reducing noise by executing pre-injection and post-injection at specific intervals and controlling a timing of occurrence of a peak of combustion pressure due to each injection.

It has been found that the optimization of a ratio of a peak of combustion pressure by pre-injection and a peak of combustion pressure by post-injection, a timing of occurrence of both peaks, and the like may contribute to reduction of combustion noise. However, at the practical level, in a case where application of premixed compression ignition combustion is extended to medium and high load operation ranges, concrete means for suppressing combustion noise to a practically acceptable level has not been proposed yet in actuality.

JP 2016 / 166 587 A discloses a combustion control device comprising an injector and an injection amount / timing control determination portion for determining an injection timing of first and second fuel injections.

US 2009 / 259 383 A1 discloses a fuel system diagnostics by analyzing cylinder pressure signal.

### SUMMARY

An object of the present invention is to provide a fuel injection control device and a fuel injection control method capable of suppressing combustion noise as much as possible in a diesel engine that performs fuel injection into the combustion chamber by pre-injection and post-injection during one cycle.

This object is achieved by the features of the independent claims. Further developments are defined in the dependent claims.

A fuel injection control device for a diesel engine according to one aspect of the present invention includes a fuel injection valve that injects fuel into a combustion chamber, and a fuel injection control unit that controls operation of the fuel injection valve. The fuel injection control unit includes a split injection control unit that causes the fuel injection valve to execute pre-injection for injecting fuel at a predetermined first timing, and post-injection for injecting fuel at a second timing later than the pre-injection, a setting unit that sets a fuel injection amount or a fuel injection timing in the pre-injection or the post-injection so that a value difference between a value of a first peak, which is a peak of an increase rate of combustion pressure in the combustion chamber accompanying the pre-injection, and a value of a second peak, which is a peak of an increase rate of combustion pressure in the combustion chamber accompanying the post-injection, falls within a predetermined range, and a calculation unit that calculates the first and second peaks in an increase rate of the combustion pressure by excluding motoring pressure, which is an in-cylinder pressure at the time of non-combustion of the combustion chamber.

A fuel injection control method for a diesel engine according to still another aspect of the present invention is a method of controlling fuel injection operation of a diesel engine system including a fuel injection valve that injects fuel into a combustion chamber, a fuel injection control unit that controls operation of the fuel injection valve, and a storage unit. The method includes a step of causing the fuel injection valve to execute pre-injection for injecting fuel at a predetermined first timing, and post-injection for injecting fuel at a second timing later than the pre-injection, a step of setting a fuel injection amount or a fuel injection timing in the pre-injection or the post-injection so that a value difference between a value of a first peak which is a peak of an increase rate of combustion pressure in the combustion chamber accompanying the pre-injection, and a value of a second peak which is a peak of an increase rate of combustion pressure in the combustion chamber accompanying the post-injection, falls within a predetermined range, and a step of calculating the first and second peaks in an increase rate of the combustion pressure by subtracting motoring pressure from the combustion pressure. The motoring pressure is an in-cylinder pressure at the time of non-combustion of the combustion chamber, and the motoring pressure is stored in advance in the storage unit as data associated with a crank angle.

### BRIEF DESCRIPTION OF DRAWINGS

FIG. 1 is a system diagram of a diesel engine to which a fuel injection control device according to the present invention is applied;
FIG. 2A is a perspective view of a crown surface portion of a piston of the diesel engine shown in FIG. 1, and FIG. 2B is a perspective view with a cross section of the piston;
FIG. 3 is an enlarged view of the cross section of the piston shown in FIG. 2B;
FIG. 4 is a cross-sectional view of the piston for illustrating a relationship between the crown surface of the piston and an injection axis of fuel by an injector;
FIG. 5 is a time chart showing a timing of fuel injection and a heat release rate;
FIG. 6 is a diagram schematically showing a state of generation of air-fuel mixture in a combustion chamber;
FIG. 7 is a block diagram showing a control system of a diesel engine;
FIG. 8 is a schematic diagram showing peaks of heat release rates generated by combustions of pre-injection and post-injection and a ratio of them, and an interval between these peaks;
FIGS. 9A to 9C are schematic diagrams for explaining a cancellation effect of combustion noise;
FIG. 10 is a graph showing an analysis result of a frequency spectrum of a pressure wave generated in a cylinder;
FIG. 11A is a graph showing ten types of pressure change rate waveforms in which heat release ratios of pre-combustion and post-combustion are varied, and FIG. 11B is a graph showing an analysis result of a frequency spectrum of pressure waves when pressure change rate waveforms are applied;
FIG. 12A is a graph showing an in-cylinder pressure including a motoring pressure, and FIG. 12B is a graph showing an analysis result of a frequency spectrum of a pressure wave of a motoring pressure;
FIG. 13A is a graph showing an in-cylinder pressure excluding a motoring pressure, and FIG. 13B is a graph excluding a motoring pressure from the graph of FIG. 11B;
FIG. 14 is a graph showing a desirable heat release rate when pre-injection and post-injection are executed; and
FIG. 15 is a flowchart showing an example of fuel injection control.

### DETAILED DESCRIPTION

### [Overall configuration of engine]

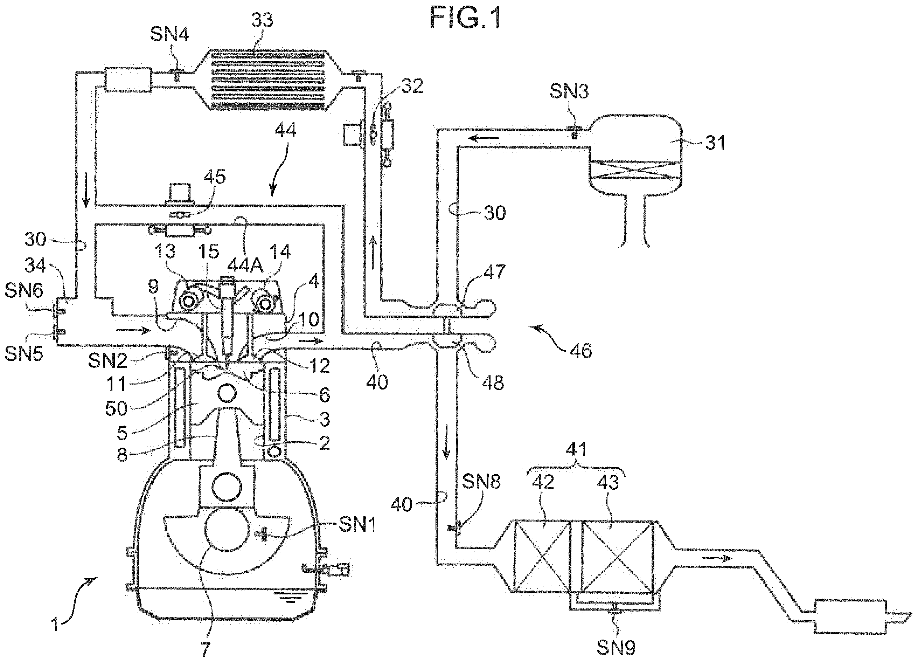

Hereinafter, an embodiment of a fuel injection control device for a diesel engine according to the present invention will be described in detail based on the drawings. First, an overall configuration of a diesel engine system to which a fuel injection control device according to the present invention is applied will be described based on FIG. 1. The diesel engine shown in FIG. 1 is a four-cycle diesel engine mounted on a vehicle as a power source for traveling. The diesel engine system includes an engine main body 1 having a plurality of cylinders 2 and driven by receiving supply of fuel mainly composed of light oil, an intake passage 30 through which intake air introduced into the engine main body 1 flows, an exhaust passage 40 through which exhaust gas discharged from the engine main body 1 flows, an EGR device 44 for returning part of exhaust gas flowing through the exhaust passage 40 to the intake passage 30, and a turbocharger 46 driven by exhaust gas passing through the exhaust passage 40.

The engine main body 1 is an engine that has a plurality of the cylinders 2 (only one of which is shown in FIG. 1) arranged in a direction perpendicular to the paper surface of FIG. 1 and is driven by receiving a supply of fuel mainly composed of light oil. The engine main body 1 includes a cylinder block 3, a cylinder head 4, and a piston 5. The cylinder block 3 has a cylinder liner that forms the cylinder 2. The cylinder head 4 is attached to an upper surface of the cylinder block 3 and blocks an upper opening of the cylinder 2. The piston 5 is accommodated in the cylinder 2 so as to be capable of reciprocating and sliding, and is connected to the crankshaft 7 with a connecting rod 8 interposed between them. In response to a reciprocating motion of the piston 5, the crankshaft 7 rotates about its central axis. A structure of the piston 5 will be described in detail later.

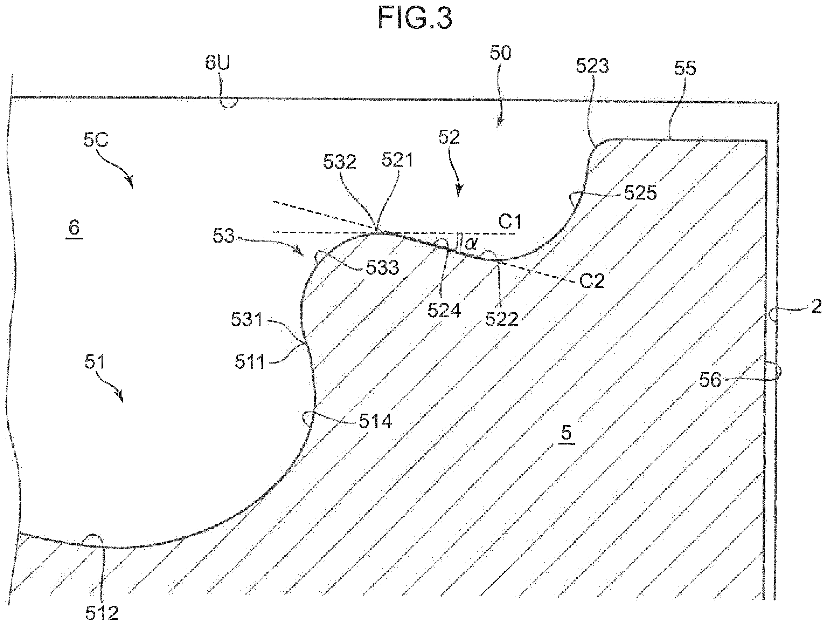

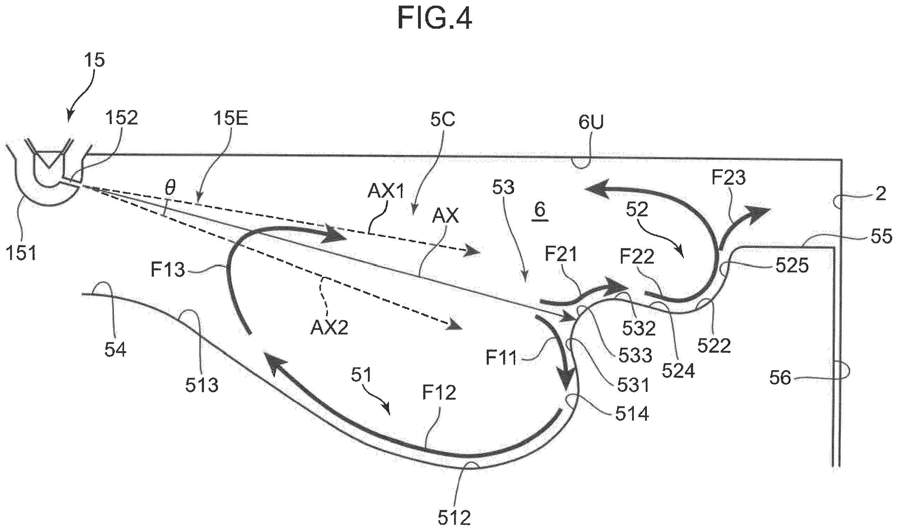

A combustion chamber 6 is formed above the piston 5. The combustion chamber 6 is formed by a lower surface of the cylinder head 4 (a combustion chamber ceiling surface 6U, see FIGS. 3 and 4), the cylinder 2, and a crown surface 50 of the piston 5. The fuel is supplied to the combustion chamber 6 by injection from an injector 15 described later. A mixture of the supplied fuel and air is burned in the combustion chamber 6, and the piston 5 pushed down by an expansion force of the combustion reciprocates in a vertical direction.

A crank angle sensor SN1 and a water temperature sensor SN2 are attached to the cylinder block 3. The crank angle sensor SN1 detects a rotation angle (crank angle) of the crankshaft 7 and a rotational speed of the crankshaft 7 (engine rotational speed). The water temperature sensor SN2 detects a temperature (engine water temperature) of cooling water flowing in the inside of the cylinder block 3 and the cylinder head 4.

An intake port 9 and an exhaust port 10 communicating with the combustion chamber 6 are formed in the cylinder head 4. An intake side opening which is a downstream end of the intake port 9 and an exhaust side opening which is an upstream end of the exhaust port 10 are formed on the lower surface of the cylinder head 4. The cylinder head 4 is assembled with an intake valve 11 for opening and closing the intake side opening and an exhaust valve 12 for opening and closing the exhaust side opening. Note that, although illustration is omitted, a valve type of the engine main body 1 is a four-valve type of two intake valves and two exhaust valves, and two of the intake ports 9 and two of the exhaust ports 10, and two of the intake valves 11 and two of the exhaust valves 12 are provided for each of the cylinders 2.

The cylinder head 4 is provided with an intake side valve mechanism 13 including a camshaft and an exhaust side valve mechanism 14. The intake valve 11 and the exhaust valve 12 are driven to open and close in conjunction with the rotation of the crankshaft 7 by the valve mechanisms 13 and 14. The intake side valve mechanism 13 incorporates an intake VVT capable of changing at least an opening timing of the intake valve 11, and the exhaust side valve mechanism 14 incorporates an exhaust VVT capable of changing at least a closing timing of the exhaust valve 12.

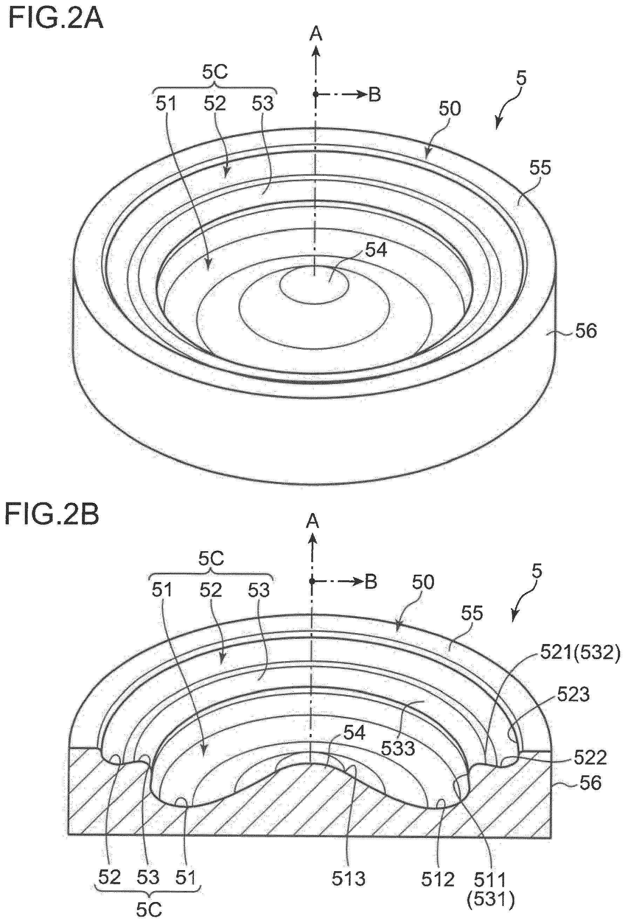

The cylinder head 4 is provided with the injector 15 (fuel injection valve) for injecting fuel into the combustion chamber 6 from a tip portion, one for each of the cylinders 2. The injector 15 injects fuel supplied through a fuel supply pipe (not shown) into the combustion chamber 6. The injector 15 is assembled to the cylinder head 4 so that the tip portion (a nozzle 151; FIG. 4) for injecting fuel is located at or near a radial center of the combustion chamber 6, and injects fuel toward a cavity 5C (FIGS. 2 to 4) described later formed on the crown surface 50 of the piston 5.

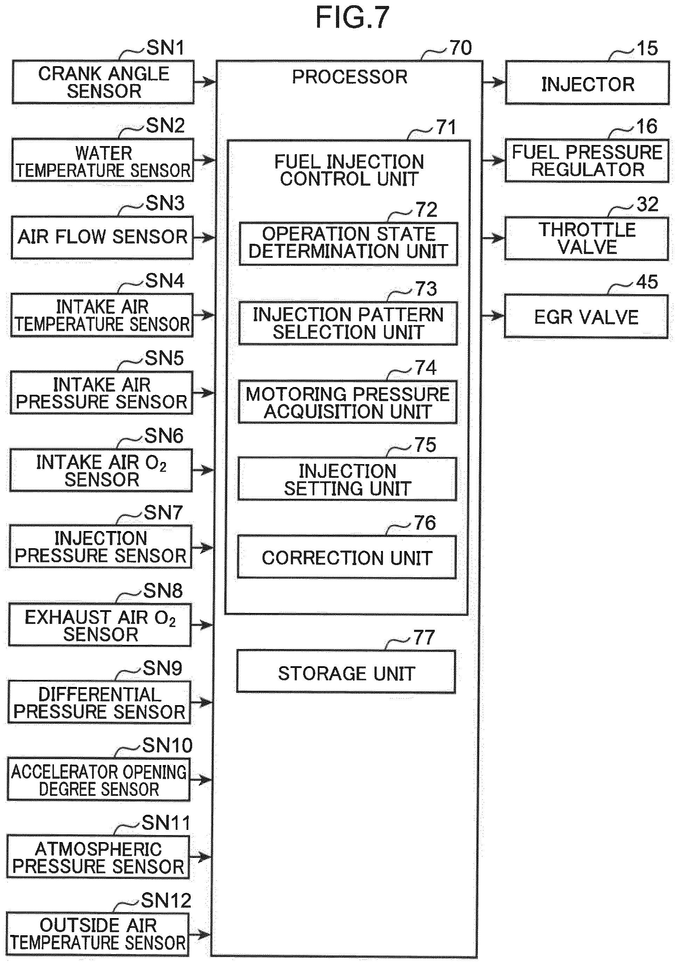

The injector 15 is connected to a pressure accumulation common rail (not shown) common to all the cylinders 2 with the fuel supply pipe interposed between them. In the common rail, high pressure fuel pressurized by a fuel pump (not shown) is stored. The fuel accumulated in the common rail is supplied to the injector 15 of each of the cylinders 2 so that the fuel is injected from each of the injectors 15 into the combustion chamber 6 at a high pressure (about 50 MPa to 250 MPa). Between the fuel pump and the common rail, a fuel pressure regulator 16 (not shown in FIG. 1, see FIG. 7) for changing an injection pressure which is the pressure of the fuel injected from the injector 15 is provided.

The intake passage 30 is connected to one side surface of the cylinder head 4 so as to communicate with the intake port 9. Air (fresh air) taken in from the upstream end of the intake passage 30 is introduced into the combustion chamber 6 through the intake passage 30 and the intake port 9. In the intake passage 30, an air cleaner 31, the turbocharger 46, a throttle valve 32, an intercooler 33, and a surge tank 34 are disposed in this order from the upstream side.

The air cleaner 31 removes a foreign substance during intake to clean the intake air. The throttle valve 32 opens and closes the intake passage 30 in conjunction with the stepping operation of an accelerator (not shown) to adjust a flow rate of intake air in the intake passage 30. The turbocharger 46 sends the intake air to a downstream side of the intake passage 30 while compressing the intake air. The intercooler 33 cools the intake air compressed by the turbocharger 46. The surge tank 34 is a tank that is disposed on an immediately upstream side of an intake manifold connected to the intake port 9 and provides space in which the intake air is evenly distributed to a plurality of the cylinders 2.

In the intake passage 30, an air flow sensor SN3, an intake air temperature sensor SN4, an intake air pressure sensor SN5, and an intake air O₂ sensor SN6 are disposed. The air flow sensor SN3 is disposed on a downstream side of the air cleaner 31 and detects a flow rate of intake air passing through the portion. The intake air temperature sensor SN4 is disposed on a downstream side of the intercooler and detects a temperature of the intake air passing through the portion. The intake air pressure sensor SN5 and the intake air O₂ sensor SN6 are disposed in the vicinity of the surge tank 34, and detect the pressure of intake air passing through the portion and the oxygen concentration of the intake air, respectively. Note that, although not shown in FIG. 1, an injection pressure sensor SN7 (FIG. 7) that detects the injection pressure of the injector 15 is provided.

The exhaust passage 40 is connected to the other side surface of the cylinder head 4 so as to communicate with the exhaust port 10. Burned gas (exhaust gas) generated in the combustion chamber 6 is discharged to the outside of a vehicle through the exhaust port 10 and the exhaust passage 40. An exhaust gas purification device 41 is provided in the exhaust passage 40. The exhaust gas purification device 41 incorporates a three-way catalyst 42 for purifying harmful components (HC, CO, NOx) contained in exhaust gas flowing through the exhaust passage 40, and a diesel particulate filter (DPF) 43 for collecting particulate matters contained in exhaust gas.

In the exhaust passage 40, an exhaust air O₂ sensor SN8 and a differential pressure sensor SN9 are disposed. The exhaust air O₂ sensor SN8 is disposed between the turbocharger 46 and the exhaust gas purification device 41, and detects the oxygen concentration of exhaust gas passing through the portion. The differential pressure sensor SN9 detects a differential pressure between an upstream end and a downstream end of the DPF 43.

The EGR device 44 includes an EGR passage 44A connecting the exhaust passage 40 and the intake passage 30, and an EGR valve 45 provided in the EGR passage 44A. The EGR passage 44A connects a portion of the exhaust passage 40 on an upstream side relative to the turbocharger 46 and a portion of the intake passage 30 between the intercooler 33 and the surge tank 34. Note that an EGR cooler (not shown) that cools exhaust gas (EGR gas) returned from the exhaust passage 40 to the intake passage 30 by heat exchange is disposed in the EGR passage 44A. The EGR valve 45 adjusts a flow rate of exhaust gas flowing through the EGR passage 44A.

The turbocharger 46 includes a compressor 47 disposed on the intake passage 30 side and a turbine 48 disposed in the exhaust passage 40. The compressor 47 and the turbine 48 are integrally rotatably connected by a turbine shaft. The turbine 48 receives energy of exhaust gas flowing through the exhaust passage 40 and rotates. By the compressor 47 rotating in conjunction with the above, air flowing through the intake passage 30 is compressed (supercharged).

### [Detailed structure of piston]

Next, a structure of the piston 5, in particular, a structure of the crown surface 50 will be described in detail. FIG. 2A is a perspective view mainly showing an upper part of the piston 5. The piston 5 includes a piston head on an upper side and a skirt portion located on a lower side. However, FIG. 2A shows the piston head portion having the crown surface 50 on a top surface. FIG. 2B is a perspective view of the piston 5 with a radial cross section. FIG. 3 is an enlarged view of the radial cross section shown in FIG. 2B. Note that, in FIGS. 2A and 2B, a cylinder axial direction A and a radial direction B of the combustion chamber are indicated by arrows.

The piston 5 includes the cavity 5C, a peripheral flat surface portion 55, and a side peripheral surface 56. As described above, part (bottom surface) of a combustion chamber wall surface that defines the combustion chamber 6 is formed by the crown surface 50 of the piston 5, and the cavity 5C is provided on the crown surface 50. The cavity 5C is a portion in which the crown surface 50 is recessed in a downward direction in the cylinder axial direction A, and is a portion that receives injection of fuel from the injector 15. The peripheral flat surface portion 55 is an annular flat surface portion disposed in a region near an outer peripheral edge in the radial direction B on the crown surface 50. The cavity 5C is disposed in a central region in the radial direction B of the crown surface 50 excluding the peripheral flat surface portion 55. The side peripheral surface 56 is a surface in sliding contact with an inner wall surface of the cylinder 2 and is provided with a plurality of ring grooves into which a piston ring (not shown) is fitted.

The cavity 5C includes a first cavity portion 51, a second cavity portion 52, a connecting portion 53, and a ridge portion 54. The first cavity portion 51 is a recess disposed in a central region of the crown surface 50 in the radial direction B. The second cavity portion 52 is an annular recess disposed on an outer peripheral side of the first cavity portion 51 on the crown surface 50. The connecting portion 53 is a portion connecting the first cavity portion 51 and the second cavity portion 52 in the radial direction B. The ridge portion 54 is a mountain-shaped convex portion disposed at a central position in the radial direction B of the crown surface 50 (first cavity portion 51). The ridge portion 54 is convexly provided at a position directly below the nozzle 151 of the injector 15 (FIG. 4).

The first cavity portion 51 includes a first upper end portion 511, a first bottom portion 512, and a first inner end portion 513. The first upper end portion 511 is at the highest position in the first cavity portion 51 and is continuous with the connecting portion 53. The first bottom portion 512 is an annular region in a top view, the first bottom portion being most recessed in the first cavity portion 51. Even in the entire cavity 5C, the first bottom portion 512 is a deepest portion, and the first cavity portion 51 has a predetermined depth (first depth) in the cylinder axial direction A in the first bottom portion 512. In a top view, the first bottom portion 512 is positioned closer to an inner side in the radial direction B with respect to the connecting portion 53.

The first upper end portion 511 and the first bottom portion 512 are connected by a radially recessed portion 514 curved outward in the radial direction B. The radially recessed portion 514 has a portion which is recessed outward in the radial direction B relative to the connecting portion 53. The first inner end portion 513 is located at an innermost radial position in the first cavity portion 51 and is continuous with a lower end of the ridge portion 54. The first inner end portion 513 and the first bottom portion 512 are connected by a curved surface that is gently curved in a skirt-like shape.

The second cavity portion 52 includes a second inner end portion 521, a second bottom portion 522, a second upper end portion 523, a tapered region 524, and a rising wall region 525. The second inner end portion 521 is located at an innermost radial position in the second cavity portion 52 and continues to the connecting portion 53. The second bottom portion 522 is a most recessed region in the second cavity portion 52. The second cavity portion 52 has a depth shallower than the first bottom portion 512 in the cylinder axial direction A at the second bottom portion 522. That is, the second cavity portion 52 is a concave portion located above the first cavity portion 51 in the cylinder axial direction A. The second upper end portion 523 is located at a highest position in the second cavity portion 52 and a radially outermost side, and is continuous with the peripheral flat surface portion 55.

The tapered region 524 is a portion that extends from the second inner end portion 521 toward the second bottom portion 522 and has a surface shape that is inclined radially outward and downward. As shown in FIG. 3, the tapered region 524 has a slope along a slope line C2 that intersects with a horizontal line C1 extending in the radial direction B at a slope angle α.

The rising wall region 525 is a wall surface which is formed so as to rise relatively steeply on a radially outer side relative to the second bottom portion 522. In a cross-sectional shape in the radial direction B, a wall surface of the second cavity portion 52 is curved from a horizontal direction toward an upper direction from the second bottom portion 522 to the second upper end portion 523, and a portion considered as a wall surface close to a vertical wall in the vicinity of the second upper end portion 523 is the rising wall region 525. A lower portion of the rising wall region 525 is located on an inner side in the radial direction B with respect to an upper end position of the rising wall region 525. In this manner, a mixture can be prevented from returning too much to an inner side in the radial direction B of the combustion chamber 6, and combustion can be performed by effectively utilizing space (squish space) on a radially outer side than the rising wall region 525.

The connecting portion 53 has a shape projecting radially inward in a knot-like shape between the first cavity portion 51 located on a lower side and the second cavity portion 52 located on an upper side in a cross-sectional shape in the radial direction B. The connecting portion 53 has a lower end portion 531, a third upper end portion 532 (upper end portion in the cylinder axial direction), and a central portion 533 positioned in the center between them. The lower end portion 531 is a continuous portion with the first upper end portion 511 of the first cavity portion 51. The third upper end portion 532 is a continuous portion with the second inner end portion 521 of the second cavity portion 52.

In the cylinder axial direction A, the lower end portion 531 is a lowermost portion of the connecting portion 53, and the third upper end portion 532 is an uppermost portion. The tapered region 524 described above is also a region extending from the third upper end portion 532 toward the second bottom portion 522. The second bottom portion 522 is positioned lower than the third upper end portion 532. That is, the second cavity portion 52 of the present embodiment does not have a bottom surface extending horizontally from the third upper end portion 532 to an outer side in the radial direction B, in other words, the third upper end portion 532 and the peripheral flat surface portion 55 are not connected by a horizontal surface, but the second cavity portion 52 has the second bottom portion 522 which is recessed lower than the third upper end portion 532.

The ridge portion 54 protrudes upward, and its projection height is the same as a height of the third upper end portion 532 of the connecting portion 53 and is at a position recessed from the peripheral flat surface portion 55. The ridge portion 54 is located at the center of a first cavity portion 51 having a circular shape in a top view. In this manner, the first cavity portion 51 is in the form of an annular groove formed around the ridge portion 54.

### [Regarding spatial separation of fuel injection]

Next, a fuel injection state into the cavity 5C by the injector 15 and flow of mixture after injection will be described based on FIG. 4. FIG. 4 is a simple cross-sectional view of the combustion chamber 6 and shows a relationship between the crown surface 50 (cavity 5C) and an injection axis AX of injected fuel 15E injected from the injector 15, and arrows F11, F12, F13, F21, F22, and F23 that schematically represent flow of the mixture after injection.

The injector 15 includes the nozzle 151 arranged to project downward from a combustion chamber ceiling surface 6U (a lower surface of the cylinder head 4) to the combustion chamber 6. The nozzle 151 has an injection hole 152 from which fuel is injected into the combustion chamber 6. Although one of the injection holes 152 is shown in FIG. 4, a plurality of the injection holes 152 are arranged at equal pitches in a circumferential direction of the nozzle 151 in actuality. The fuel injected from the injection holes 152 is injected along the injection axis AX in the diagram. The injected fuel diffuses at a spray angle θ. FIG. 4 shows an upper diffusion axis AX1 showing upward diffusion with respect to the injection axis AX, and a lower diffusion axis AX2 showing downward diffusion. The spray angle θ is an angle formed by the upper diffusion axis AX1 and the lower diffusion axis AX2.

The injection hole 152 can inject fuel toward the connecting portion 53 of the cavity 5C. That is, by causing the fuel injection operation to be performed from the injection hole 152 at a predetermined crank angle of the piston 5, the injection axis AX can be directed to the connecting portion 53. FIG. 4 shows a positional relationship between the injection axis AX and the cavity 5C at the predetermined crank angle. The fuel injected from the injection hole 152 is blown to the connecting portion 53 while being mixed with air in the combustion chamber 6 to form an air-fuel mixture.

As shown in FIG. 4, the fuel 15E injected toward the connecting portion 53 along the injection axis AX collides with the connecting portion 53 and then is spatially separated into a portion in a direction of the first cavity portion 51 (downward direction) (an arrow F11) and a portion in a direction of the second cavity portion 52 (upward direction) (an arrow F21). That is, fuel injected toward the central portion 533 of the connecting portion 53 is separated into upper and lower portions, and, after that, the portions of fuel are mixed with air present in the first and second cavity portions 51 and 52, and flow along a surface shape of the cavity portions 51 and 52.

Specifically, an air-fuel mixture moving in the direction of the arrow F11 (downward direction) enters the radially recessed portion 514 of the first cavity portion 51 from the lower end portion 531 of the connecting portion 53, and flows in a downward direction. After the above, the air-fuel mixture changes its flowing direction from the downward direction to an inner side direction in the radial direction B according to a curved shape of the radially recessed portion 514, and flows according to a bottom surface shape of the first cavity portion 51 having the first bottom portion 512 as shown by the arrow F12. At this time, the air-fuel mixture is mixed with air in the first cavity portion 51 and its concentration is gradually lowered. Due to the presence of the ridge portion 54, the bottom surface of the first cavity portion 51 has a shape that rises toward a radial direction center. Therefore, the air-fuel mixture flowing in the direction of the arrow F12 is lifted upward and eventually flows radially outward from the combustion chamber ceiling surface 6U as indicated by an arrow F13. Even in such flow, the air-fuel mixture mixes with air remaining in the combustion chamber 6 to become a homogeneous thin air-fuel mixture.

On the other hand, the air-fuel mixture moving in the direction of the arrow F21 (upward direction) enters the tapered region 524 of the second cavity portion 52 from the third upper end portion 532 of the connecting portion 53 and moves in an obliquely downward direction along the inclination of the tapered region 524. Then, as indicated by the arrow F22, the air-fuel mixture reaches the second bottom portion 522. Here, the tapered region 524 is a surface having an inclination along the injection axis AX. Therefore, the air-fuel mixture can flow smoothly to a radially outer side. That is, the air-fuel mixture reaches a deep position on the radially outer side of the combustion chamber 6 due to the presence of the tapered region 524 and the presence of the second bottom portion 522 where the third upper end portion 532 of the connecting portion 53 is also located below.

After the above, the air-fuel mixture is lifted upward by the rising curved surface between the second bottom portion 522 and the rising wall region 525, and flows to a radially inner side from the combustion chamber ceiling surface 6U. During the flow indicated by the arrow F22 as described above, the air-fuel mixture mixes with air in the second cavity portion 52 to become a homogeneous thin air-fuel mixture. Here, the rising wall region 525 extending generally in a vertical direction is provided on a radially outer side relative to the second bottom portion 522, so that the injected fuel (air-fuel mixture) is blocked from reaching an inner peripheral wall (on which a liner (not shown) exists in general) of the cylinder 2. That is, although the air-fuel mixture can flow to the vicinity of a radially outer side of the combustion chamber 6 by the formation of the second bottom portion 522, the presence of the rising wall region 525 suppresses interference with the inner peripheral wall of the cylinder 2. For this reason, it is possible to suppress the occurrence of cooling loss due to the interference.

Here, the rising wall region 525 has a shape in which its lower portion is positioned on an inner side in the radial direction B with respect to an upper end position. For this reason, flow indicated by the arrow F22 is not excessively strong, and air-fuel mixture can be prevented from returning excessively to an inner side of the radial direction B. When the flow of the arrow F22 is too strong, a partially burned mixture collides with the fuel before newly injected fuel is sufficiently diffused, and homogeneous combustion is inhibited and soot and the like are generated. However, the rising wall region 525 of the present embodiment does not include a shape that is hollowed to a radially outer side, the flow of the arrow F22 is suppressed, and the flow toward an outer side of the radial direction B indicated by the arrow F23 is also generated. In particular, in a later stage of combustion, due to pulling by the reverse squish flow, the flow of the arrow F23 tends to be generated. Therefore, combustion can be performed by effectively utilizing space (the squish space on the peripheral flat surface portion 55) on a radially outer side relative to the rising wall region 252. Therefore, combustion that suppresses generation of soot and the like, and effectively utilizes entire combustion chamber space can be performed.

As described above, fuel injected toward the connecting portion 53 along the injection axis AX collides with the connecting portion 53 and is spatially separated, and utilizes air that exists in space of the first and second cavity portions 51 and 52 to generate an air-fuel mixture. In this manner, space of the combustion chamber 6 can be widely used to form a homogeneous thin air-fuel mixture, and generation of soot and the like can be suppressed at the time of combustion.

### [Regarding temporal separation of fuel injection]

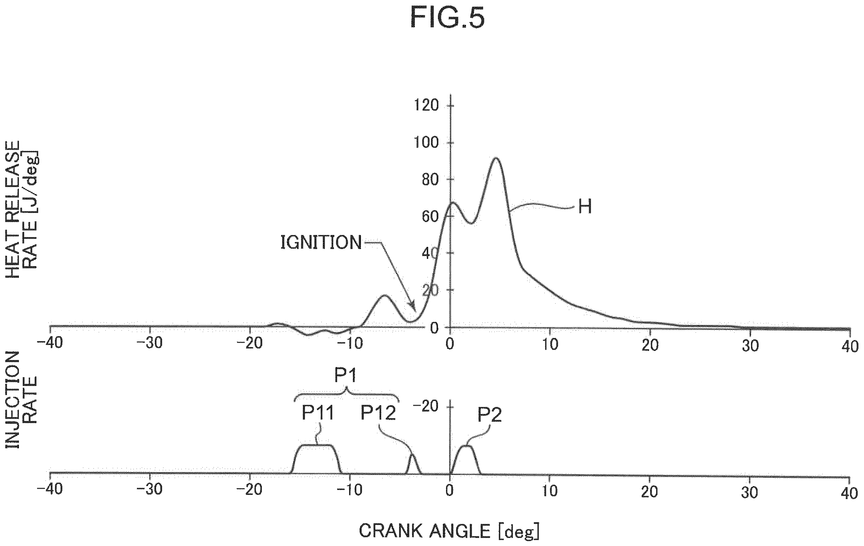

In the present embodiment, in addition to the above-described spatial separation of the fuel injection, an example in which air in the combustion chamber 6 is more effectively used by being separated in time will be shown. FIG. 5 is a time chart showing an example of a timing of fuel injection from the injector 15 to the cavity 5C and a heat release rate characteristic H at that time. The operation of fuel injection by the injector 15 is controlled by a fuel injection control unit 71 (see FIG. 7) described later. The fuel injection control unit 71 (split injection control unit) performs, per cycle, pre-injection for injecting fuel at a predetermined first timing, and post-injection for injecting fuel at a second timing later than the pre-injection.

The present embodiment shows an example, in which the fuel injection control unit 71 causes the injector 15 to execute pilot injection P1 as the pre-injection and main injection P2 as the post-injection. The main injection P2 is fuel injection that is executed at a timing (the second timing) at which the piston 5 is located near a compression top dead center (TDC). FIG. 5 shows an example in which the main injection P2 is performed at a timing slightly delayed from TDC. The pilot injection P1 is fuel injection that is executed at a timing (the first timing) earlier than the main injection P2 and earlier than TDC. The present embodiment shows an example, in which the pilot injection P1 is divided into a first pilot injection P11 on an advance side and a second pilot injection P12 on a retard side.

FIG. 5 shows an example in which the first pilot injection P11 is executed in a period from a crank angle -CA16 to -CA12. An injection rate peak value of fuel is the same between the first pilot injection P11 and the main injection P2, but a fuel injection period is set to be longer in the former. The second pilot injection P12 is a small amount of fuel injection executed between the first pilot injection P11 and the main injection P2. The second pilot injection P12 is executed for the purpose of reducing noise by making a valley between peaks in the heat release rate characteristic H (a valley near crank angles CA2 to 3deg) as small as possible. However, the second pilot injection P12 may be omitted.

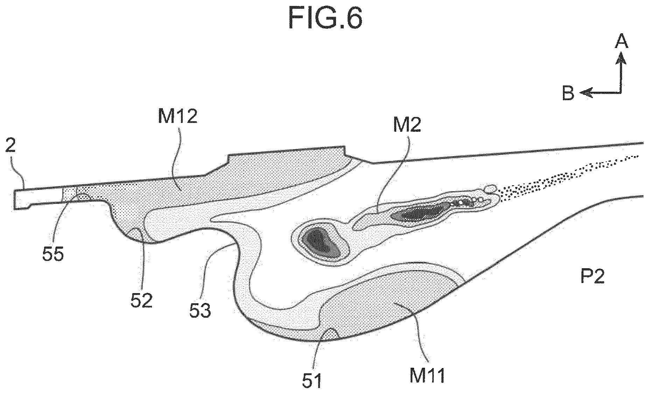

The fuel injection directed to the connecting portion 53 described above is executed at the time of the first pilot injection P11. The main injection P2 is injection that is performed between upper and lower air-fuel mixtures of fuel (air-fuel mixture) injected by the first pilot injection P11 after the fuel is spatially separated into the first cavity portion 51 on a lower side and the second cavity portion 52 on an upper side as described above. This point will be described based on FIG. 6. FIG. 6 is a diagram schematically showing a state of generation of air-fuel mixture in the combustion chamber 6 at a timing at which the main injection P2 ends.

Injected fuel of the first pilot injection P11 is blown to the connecting portion 53 while being mixed with air in the combustion chamber 6 to form an air-fuel mixture. By being blown to the connecting portion 53, the air-fuel mixture is separated into a lower mixture M11 directed to the first cavity portion 51 and an upper mixture M12 directed to the second cavity portion 52 as shown in FIG. 6. This is the spatial separation of the air-fuel mixture described above. The main injection P2 is executed for creating a new air-fuel mixture by utilizing air remaining in space between two separated mix air-fuel mixtures obtained after the fuel (air-fuel mixture) injected in the pilot injection P1 enters the space of the first and second cavity portions 51 and 52 and is spatially separated.

Further description will be added based on FIG. 6. At an execution timing of the main injection P2, the piston 5 is approximately at a position of TDC. Accordingly, fuel of the main injection P2 is injected toward a position slightly lower than the connecting portion 53. The lower mixture M11 and the upper mixture M12 of the first pilot injection P11 injected previously enter the first cavity portion 51 and the second cavity portion 52, respectively, and are mixed with air in space of the respective portions to be diluted progressively. Immediately before the main injection P2 is started, unused air (air not mixed with fuel) is present between the lower mixture M11 and the upper mixture M12. An egg shape of the first cavity portion 51 contributes to the formation of such an unused air layer. The injected fuel of the main injection P2 is in a form of entering between the lower mixture M11 and the upper mixture M12, and mixed with the unused air to become a second mixture M2. This is the temporal separation of fuel injection. As described above, in the present embodiment, the combustion effectively utilizing air present in the combustion chamber 6 can be performed by the spatial and temporal separation of fuel injection.

### [Control configuration]

FIG. 7 is a block diagram showing a control configuration of the diesel engine system. An engine system of the present embodiment is integrally controlled by a processor 70 (a fuel injection control device of a diesel engine). The processor 70 includes a CPU, a ROM, a RAM, and the like. The processor 70 receives detection signals from various sensors mounted on a vehicle. In addition to the sensors SN1 to SN9 described above, the vehicle includes an accelerator opening degree sensor SN10 for detecting an accelerator opening, an atmospheric pressure sensor SN11 for measuring an atmospheric pressure of a traveling environment of the vehicle, and an outside air temperature sensor SN12 for measuring a temperature of a traveling environment of the vehicle.

The processor 70 is electrically connected to the crank angle sensor SN1, the water temperature sensor SN2, the air flow sensor SN3, the intake air temperature sensor SN4, the intake air pressure sensor SN5, the intake air O₂ sensor SN6, the injection pressure sensor SN7, the exhaust air O₂ sensor SN8, the differential pressure sensor SN9, the accelerator opening degree sensor SN10, the atmospheric pressure sensor SN11, and the outside air temperature sensor SN12 described above. Information detected by these sensors SN1 to SN12, that is, pieces of information, such as crank angle, engine rotational speed, engine water temperature, intake air flow rate, intake air temperature, intake air pressure, intake oxygen concentration, injection pressure of the injector 15, exhaust oxygen concentration, accelerator opening, outside air temperature, air pressure, and the like are sequentially input to the processor 70.

The processor 70 controls each part of the engine while performing various determinations and calculations based on input signals from the sensors SN1 to SN12 and the like. That is, the processor 70 is electrically connected to the injector 15 (the fuel pressure regulator 16), the throttle valve 32, the EGR valve 45, and the like, and outputs control signals to these devices based on a result of the above calculation, and the like.

The processor 70 functionally includes a fuel injection control unit 71 (split injection control unit, setting unit, calculation unit) for controlling operation of the injector 15, and a storage unit 77. The fuel injection control unit 71 causes the injector 15 to execute, at least in each cycle of an operation range (hereinafter referred to as the PCI range) to which premixed compression ignition combustion is applied, pilot injection (pre-injection) for injecting fuel at a predetermined timing (first timing) before a compression top dead center and main injection (post-injection) for performing fuel injection at a timing (second timing later than the pre-injection) at which the piston 5 is located near the compression top dead center. The storage unit 77 stores information necessary for control and various setting values.

The fuel injection control unit 71 executes a predetermined program, so as to operate to functionally include an operation state determination unit 72, an injection pattern selection unit 73 (split injection control unit), a motoring pressure acquisition unit 74, an injection setting unit 75 (setting unit, calculation unit), and a correction unit 76.

The operation state determination unit 72 determines an operating state of the engine main body 1 from an engine rotational speed based on a detected value by the crank angle sensor SN1, an engine load based on opening degree information of the accelerator opening degree sensor SN10, and the like. This determination result is used to determine whether or not a current operation range is the PCI range in which the above-described pilot injection P1 and main injection P2 are executed.

The injection pattern selection unit 73 sets a pattern of fuel injection from the injector 15 in accordance with various conditions. In at least the PCI range, the injection pattern selection unit 73 sets a fuel injection pattern including the pilot injection P1 (pre-injection) and the main injection P2 (post-injection) described above.

The motoring pressure acquisition unit 74 acquires a motoring pressure which is an in-cylinder pressure at the time of non-combustion in which combustion is not performed in the combustion chamber 6. When the combustion chamber 6 is treated as closed space, the motoring pressure is determined by a compression ratio of the combustion chamber 6 and becomes largest when the piston 5 passes through the top dead center. However, the motoring pressure may fluctuate depending on surrounding conditions, such as cooling loss from the cylinder block 3, leakage of a fluid from the combustion chamber 6, a volume change due to a temperature fluctuation, and the like. The motoring pressure acquisition unit 74 acquires a motoring pressure by, for example, using a prediction formula for predicting a motoring pressure from the compression ratio and data indicating the surrounding conditions. Note that a motoring pressure may be acquired from an in-cylinder pressure measured at the time of non-combustion, such as at the time of traveling downhill, by arranging an in-cylinder pressure sensor for detecting pressure of the combustion chamber 6. Alternatively, a motoring pressure may be measured in advance, or may be obtained as a theoretical calculation value, and stored in the storage unit 77 as table data associated with a crank angle. In this case, the motoring pressure acquisition unit 74 makes an access to the storage unit 77 to acquire required motoring pressure data.

The injection setting unit 75 sets a fuel injection amount or a fuel injection timing from the injector 15 according to various conditions. In the PCI range described above, the injection setting unit 75 sets a fuel injection amount or a fuel injection timing of the pilot injection P1 or the main injection P2 so as to reduce a difference between a first peak, which is a peak of an increase rate of combustion pressure in the combustion chamber 6 accompanying the pilot injection P1 (pre-injection) and a second peak, which is a peak of an increase rate of combustion pressure in the combustion chamber 6 accompanying the main injection P2 (post-injection). In this manner, suppression on combustion noise can be achieved. At this time, the injection setting unit 75 calculates the first and second peaks at an increase rate of each combustion pressure excluding the motoring pressure. In this manner, it is possible to equalize peak differences between pressure components that truly contribute to combustion noise, and to suppress combustion noise with high accuracy. Note that reducing a difference between the first peak and the second peak means making a difference between both peaks fall within a predetermined allowable difference range, and most preferably, setting both peak values to the same value. The allowable difference range is appropriately set based on expressivity of a cancel effect of combustion noise described later.

Furthermore, the injection setting unit 75 sets a fuel injection amount from the injector 15 or a fuel injection timing, so that a peak interval between a time at which the first peak occurs and a time at which the second peak occurs becomes an interval at which an amplitude of a pressure wave due to fuel combustion of the pilot injection P1 (the first pilot injection P11) and an amplitude of a pressure wave due to fuel combustion of the main injection P2 cancel each other. In this manner, combustion noises generated by the first pilot injection P11 and the main injection P2 cancel each other, and the combustion noise can be suppressed to an extremely low level. The above will be described in detail later.

The correction unit 76 corrects the fuel injection amount or the fuel injection timing set by the injection setting unit 75 based on a predetermined combustion environment factor. The combustion environment factor is, for example, a wall surface temperature of the cylinder block 3, an in-cylinder pressure, an in-cylinder temperature, an in-cylinder oxygen concentration, an engine load, and the like, which are directly or indirectly derived from measurement value of the sensors SN1 to SN12. The correction unit 76 uses, for example, a predetermined prediction model equation to predict a time of occurrence of the first peak affecting entire combustion with reference to a combustion environment factor, obtains a deviation with respect to the first peak on a target pressure change rate characteristic, and corrects the fuel injection amount or timing so as to eliminate the deviation.

### [Two-stage heat release rate and noise cancellation]

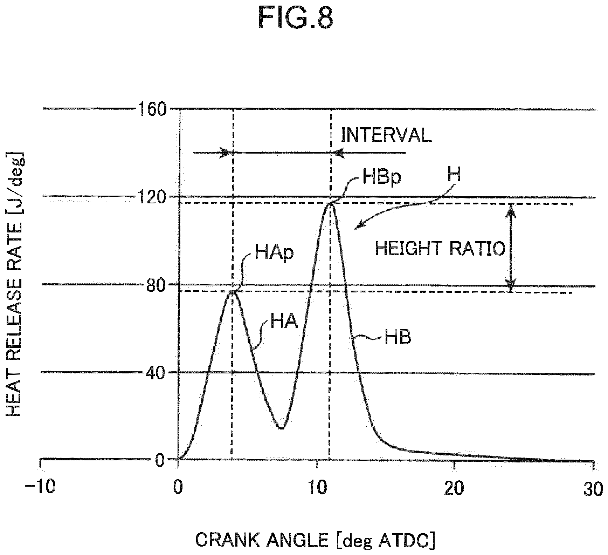

FIG. 8 is a diagram showing the heat release rate characteristic H, the diagram showing a peak of a heat release rate generated by combustion of the pilot injection P1 (the first pilot injection P11) and the main injection P2, a height ratio between them, and an interval between the peaks. The heat release rate characteristic H shown in FIG. 8 more schematically shows the heat release rate characteristic H shown in FIG. 5.

The heat release rate characteristic H is a characteristic deeply related to an increase rate of combustion pressure in the combustion chamber 6, and includes a pre-combustion portion HA which is a peak portion generated by combustion accompanying the pilot injection P1 and a post-combustion portion HB which is a peak portion generated by combustion accompanying the main injection P2. The pre-combustion portion HA and the post-combustion portion HB have a first peak HAp and a second peak HBp at which heat release rates are highest in the respective peak portions. Two peaks are also generated in a change rate (increase rate) of combustion pressure in a manner corresponding to the first and second peaks HAp and HBp.

FIG. 8 shows an example in which a value of the first peak HAp is smaller than a value of the second peak HBp. If a value of the first peak HAp or the second peak HBp is outstandingly high, combustion noise is increased due to this. Therefore, it is desirable to control a heat release ratio between the pre-combustion portion HA and the post-combustion portion HB, and to make a height ratio of the first peak HAp and the second peak HBp as uniform as possible.

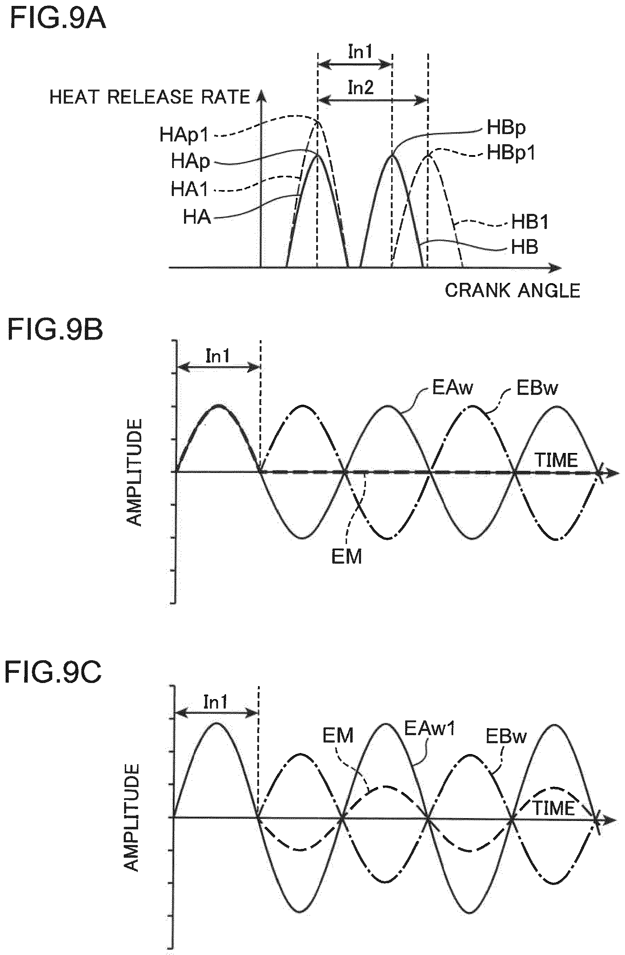

Further, an interval between a time at which the first peak HAp occurs and a time at which the second peak HBp occurs also has a great influence on suppression of combustion noise. If the interval is set to an interval at which an amplitude of a pressure wave (sound wave) due to combustion of the pre-combustion portion HA and an amplitude of a pressure wave due to combustion of the post-combustion portion HB cancel each other, an expressed pressure wave (combustion noise) can be suppressed by a frequency effect. This point will be described based on FIG. 9.

FIG. 9A to FIG. 9C are schematic diagrams for explaining a cancellation effect of combustion noise. In FIG. 9A, the pre-combustion portion HA having the first peak HAp of a heat release rate of a certain height and the post-combustion portion HB having the second peak HBp of a heat release rate of the same height as the first peak HAp are drawn schematically by solid lines. An interval between the first peak HAp and the second peak HBp is set to a first interval In1 in which pressure waves due to respective combustions cancel each other. Further, FIG. 9A shows, as a comparative example, a post-combustion portion HB1 having a peak HAp1 at the same height as the first peak HAp but occurring at a second interval In2 longer than the first interval In1, and a pre-combustion portion HA1 having a peak HAp1 higher than the first peak HAp by a dotted line.

FIG. 9B shows a pre-pressure wave EAw generated due to combustion of the pre-combustion portion HA and a post-pressure wave EBw generated due to combustion of the post-combustion portion HB. Since peak heights of the first peak HAp and the second peak HBp are the same, an amplitude of the pre-pressure wave EAw and an amplitude of the post-pressure wave EBw are the same. Further, the first interval In1 is set to 1/2 of a period of the pre-pressure wave EAw and the post-pressure wave EBw. In this case, the pre-pressure wave EAw and the post-pressure wave EBw have opposite phases and interfere with each other to cancel each other, and an amplitude of an associated wave EM of these waves becomes zero. That is, combustion noise is canceled by a cancellation effect.

On the other hand, in a case where the post-combustion portion HB1 of the comparative example is generated at the second interval In2 with respect to the pre-combustion portion HA, the pre-pressure wave EAw and the post-pressure wave EBw do not have completely opposite phases. In this case, a portion in which the cancellation effect of both the pressure waves EAw and EBw shown in FIG. 9B is diminished and the associated wave EM is amplified may be generated. For example, when both the pressure waves EAw and EBw have the same phase, the associated wave EM has a large amplitude as both the pressure waves EAw and EBw are added together. That is, combustion noise increases.

The cancellation effect becomes maximum when amplitudes of both the pressure waves EAw and EBw are the same. FIG. 9C shows a pre-pressure wave EAwl generated due to combustion of the pre-combustion portion HA1 of the comparative example and the above-described post-pressure wave EBw. Since an amplitude of the pre-pressure wave EAw1 is larger than the amplitude of the post-pressure wave EBw, the associated wave EM has an amplitude corresponding to the difference even when the first interval In1 is employed and both of them have opposite phases. Therefore, a cancellation effect of combustion noise is reduced.

In view of the above point, in order to reduce a difference between the first peak HAp and the second peak HBp as much as possible, that is, in order to contain a difference between both the peaks within the allowable difference range, and, in order to obtain an interval at which the pre-pressure wave EAw and the post-pressure wave EBw cancel each other, it is theoretically desirable to cause the injection setting unit 75 to set a fuel injection amount and a fuel injection timing in the pilot injection P1 or the main injection P2. Note that, in order to obtain a heat release rate satisfying such conditions, it is desirable to adjust (change) a fuel injection amount or a fuel injection timing of the first pilot injection P11.

As in the present embodiment, in a case where fuel injection is performed by being divided into the pre-injection and the post-injection, an ignition timing and the like are determined exclusively based on an execution situation of the pre-injection. If a mode of the pre-injection is defined, combustion accompanying the post-injection will be a relatively robust combustion. Therefore, by appropriately changing a fuel injection amount or a fuel injection timing of the first pilot injection P11 for injecting a relatively large amount of fuel at an earliest timing, control for reducing a difference between the first peak HAp and the second peak HBp, and also control for setting an appropriate interval can be precisely performed. Note that if a mode (injection amount and injection timing) of the main injection P2 is changed proactively, an entire combustion period may be shifted, which may affect the fuel efficiency and torque.

### [Verification of actual combustion noise]

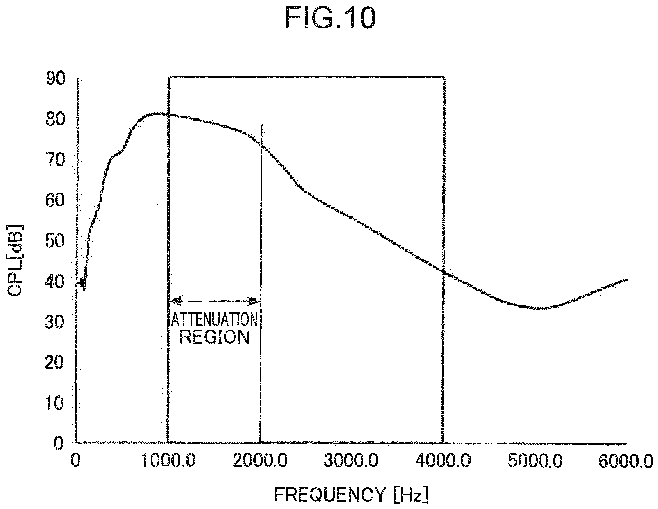

FIG. 10 is a graph showing an analysis result of a frequency spectrum of a pressure wave generated in the cylinder 2, and a vertical axis shows a cylinder pressure level (CPL). This CPL corresponds to an exciting force of a diesel knocking sound. As shown in FIG. 10, combustion noise, such as diesel knocking sound, is composed of sound pressure, in which a large number of frequency spectrum components are combined. The graph of FIG. 10 shows that a spectral component of 1000 Hz to 2000 Hz is large when a focus is placed on a range of 1000 to 4000 Hz, which is easiest to hear in a human audible frequency region.

The sound pressure composed of an energy sum of a large number of frequency spectrum components is represented by a power sum of the frequency spectrum components. Therefore, an increase or decrease in a large spectral component has a high sensitivity with respect to an increase or decrease in an entire sound pressure. In the above example, suppressing a spectral component of 1000 to 2000 Hz has a great impact on reduction of an entire sound pressure. Therefore, the range of 1000 to 2000 Hz is preferably set as an attenuation region, and an interval between the first and second peaks HAp and HBp shown in FIG. 8 is preferably set to an interval capable of canceling a pressure wave of 1000 to 2000 Hz. Specifically, the interval is preferably set to an interval at which a pressure wave due to the pre-combustion portion HA and a pressure wave due to the post-combustion portion HB cancel each other at 1500 Hz at the center of 1000 to 2000 Hz. In this manner, an interval between the first and second peaks HAp and HBp can be optimized.

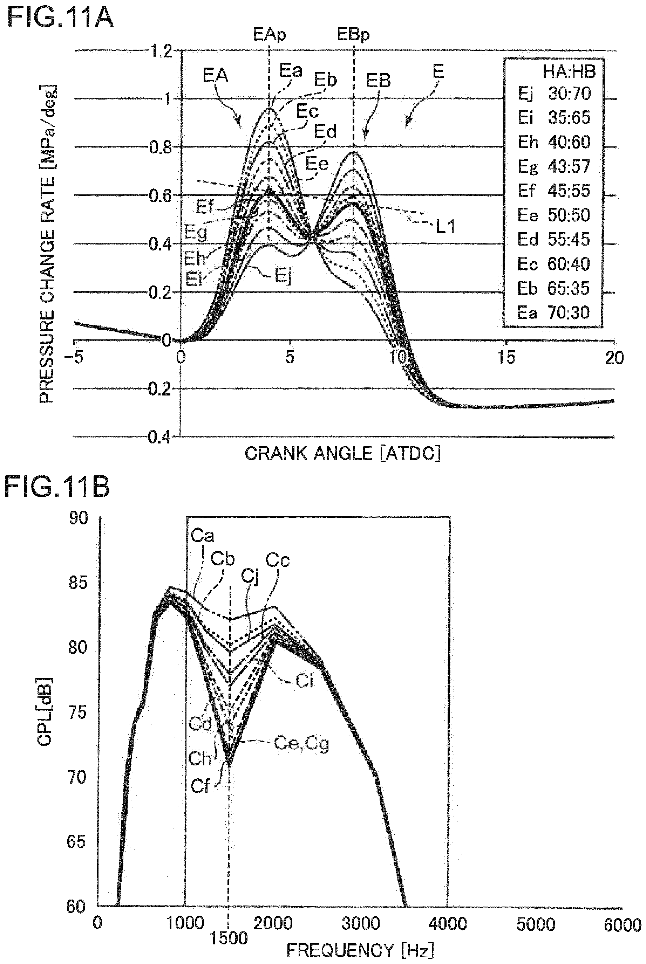

Assuming that an optimum interval of a two-stage heat release rate is obtained, it is a height ratio of the first and second peaks HAp and HBp that further contributes to reduction of combustion noise. As shown in FIGS. 9A to 9C, theoretically, setting the first and second peaks HAp and HBp at the same height should contribute most to reduction of the associated wave EM (sound pressure). In order to verify this point, a measurement result of combustion noise in a case where a target frequency of attenuation is 1500 Hz and a height ratio of the first and second peaks HAp and HBp is varied is shown in FIG. 11A and FIG. 11B.

FIG. 11A shows a pressure change rate characteristic E in a case where combustion is performed to obtain the heat release rate characteristic H having a two-stage heat release rate as shown in FIG. 8 in the combustion chamber 6. Here, graphs of ten types of pressure change rate waveforms Ea to Ej, in which a heat release ratio of the above-described pre-combustion portion HA and the post-combustion portion HB is changed, are shown. The pressure change rate waveforms Ea to Ej include a pre-pressure rise portion EA due to combustion of the pre-combustion portion HA and a post-pressure rise portion EB due to combustion of the post-combustion portion HB. A first peak EAp (first peak of an increase rate of combustion pressure) corresponding to the first peak HAp of the heat release rate characteristic H is present in the pre-pressure rise portion EA. Further, a second peak EBp (a second peak of an increase rate of combustion pressure) corresponding to the second peak HBp of the heat release rate characteristic H is present in the post-pressure rise portion EB. The pressure change rate waveforms Ea to Ej are obtained by changing a heat release ratio (the pre-combustion portion HA: the post-combustion portion HB) between 30 : 70 and 70 : 30, and a ratio of HA : HB is set to 70 : 30 for Ea, set to 65 : 35 for Eb, set to 60 : 40 for Ec, set to 55 : 45 for Ed, set to 50 : 50 for Ee, set to 45 : 55 for Ef, set to 43 : 57 for Eg, set to 40 : 60 for Eh, set to 35 : 65 for Ei, and set to 30 : 70 for Ej. As shown in FIG. 11A, it is the pressure change rate waveform Eg (HA : HB = 43 : 57) that substantially matches with the first peak EAp of the pre-pressure rise portion EA and the second peak EBp of the post-pressure rise portion EB.

FIG. 11B is a graph showing analysis results of frequency spectra Ca to Cj of pressure waves (CPL) in a case where combustion is performed in the combustion chamber 6 so that the pressure change rate waveforms Ea to Ej are achieved. The frequency spectra Ca, Cb, Cc, Cd, Ce, Cf, Cg, Ch, Ci, and Cj correspond to analysis results of the pressure change rate waveforms Ea, Eb, Ec, Ed, Ee, Ef, Eg, Eh, Ei, and Ej, respectively.

A frequency spectrum component of 1500 Hz is attenuated in all of the frequency spectra Ca to Cj, showing that an interval between the first and second peaks EAp and EBp (HAp and HBp) is appropriate. However, there is a big difference in their degree of attenuation. It is the frequency spectrum Cf corresponding to the pressure change rate waveform Ef (HA : HB = 45: 55) that can most significantly attenuate the 1500-Hz component. As shown in FIG. 11A, in the waveform Ef, heights of the peaks EAp and EBp of the pre- and post-pressure rise portions EA and EB are not uniform (see line L1 in the diagram). However, the frequency spectrum Cf more significantly attenuates the 1500-Hz component, as compared to the frequency spectrum Cg corresponding to the pressure change rate waveform Eg (HA : HB = 43 : 57) in which heights of the peaks EAp and EBp of the pre- and post-pressure rise portions EA and EB are substantially the same.

### [Contribution of motoring pressure]

The inventors of the present invention have studied a factor that generates the discrepancy as described above between a theory of combustion noise suppression in combustion accompanied by a two-stage heat release rate and an actual verification result, and, as a result, found that contribution of a motoring pressure of the engine main body 1 is the factor. That is, it has been found that combustion noise can be more effectively suppressed by obtaining the first and second peaks EAp and EBp of the pre- and post-pressure rise portions EA and EB in the pressure change rate characteristic E by excluding the motoring pressure, and then reducing a peak difference between the first and second peaks EAp and EBp to be contained within, or more preferably matched with, a predetermined allowable difference range.

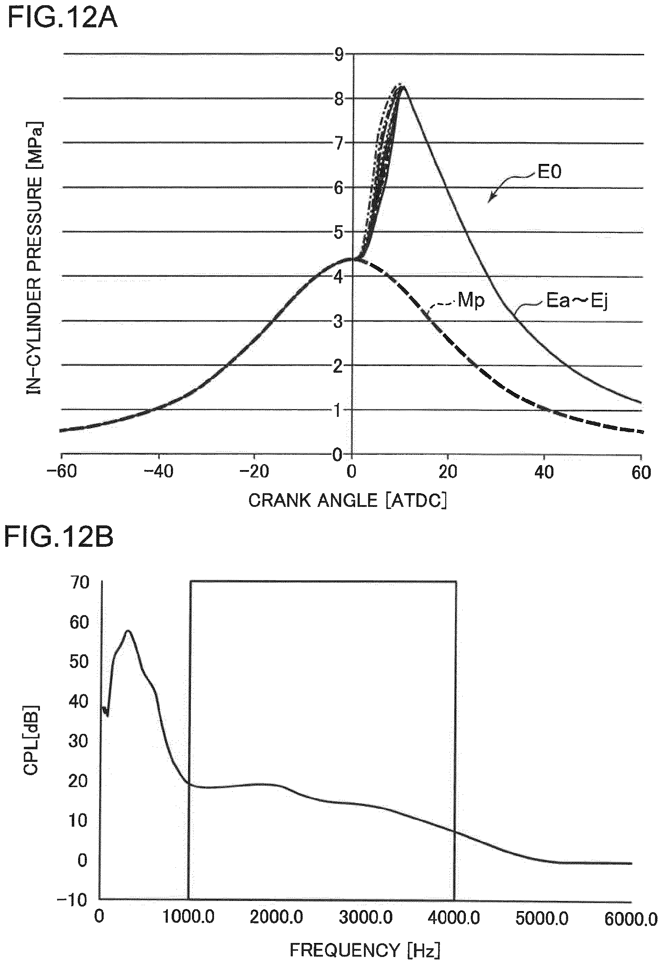

FIG. 12A is a graph showing a relationship between an in-cylinder pressure E0 including a motoring pressure Mp and a crank angle. The in-cylinder pressure E0 of the cylinder 2 obtained directly by the in-cylinder pressure sensor or indirectly from a detection result of another sensor is derived by including the motoring pressure Mp. As described above, the motoring pressure Mp is determined by a compression ratio of the combustion chamber 6, and becomes largest when the piston 5 passes through the top dead center (the crank angle = 0 degrees). The in-cylinder pressure E0 in FIG. 12A includes a pressure change waveform before differentiation (dp / dθ) of the pressure change rate waveforms Ea to Ej shown in FIG. 11A and the motoring pressure Mp.

The question here is how much the motoring pressure Mp contributes to combustion noise. FIG. 12B is a graph showing an analysis result of a frequency spectrum of a pressure wave of the motoring pressure Mp. As is clear from the graph, with the motoring pressure Mp, a frequency spectrum component of 1000 to 4000 Hz, which is a problem in a diesel knocking sound, is 20 dB or less and is substantially absent, and a low frequency spectrum component of 1000 Hz or less is a main component. Therefore, when the first and second peaks EAp and EBp of the pre- and post-pressure rise portions EA and EB are compared, it is understood to be appropriate to exclude the motoring pressure Mp that does not contribute to combustion noise from the in-cylinder pressure E0.

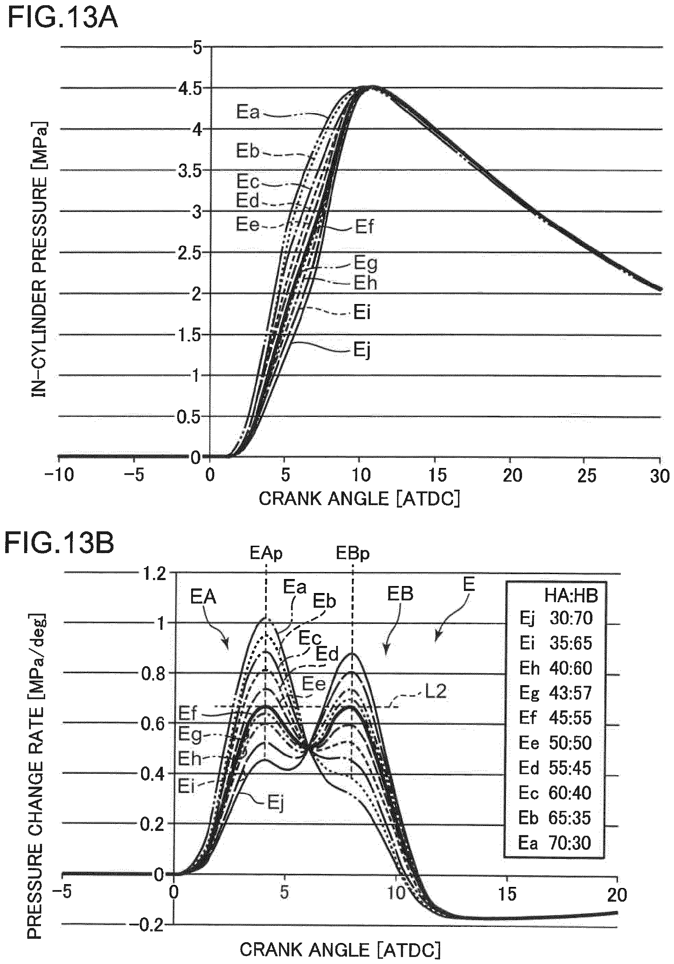

FIG. 13A is a graph showing an in-cylinder pressure obtained by excluding the motoring pressure Mp from the in-cylinder pressure E0 shown in FIG. 12A. By excluding the motoring pressure Mp, pressure change waveforms before differentiation of the pressure change rate waveforms Ea to Ej remain. FIG. 13B is a graph obtained by differentiating a pressure change waveform of FIG. 13A by a crank angle, and as a result, a graph obtained by excluding the motoring pressure Mp from the graph of FIG. 11B.

In the graph of FIG. 13B, it is the pressure change rate waveform Ef (HA : HB = 45 : 55) that the first and second peaks EAp and EBp of the pre- and post-pressure rise portions EA and EB substantially coincide (see line L2 in the diagram). Then, as shown in FIG. 11B, this pressure change rate waveform Ef attenuates the 1500-Hz component most greatly. As described above, when the motoring pressure Mp is excluded, the discrepancy between the theory of combustion noise suppression in combustion accompanied by two-stage heat release rate and an actual verification result is eliminated. The above verification shows that it is desirable to cause the injection setting unit 75 to set an injection amount or an injection timing of the pilot injection P1 (the first pilot injection P11) to achieve the heat release rate characteristic H for obtaining the pressure change rate waveform Ef in which the first and second peaks EAp and EBp coincide in a situation where the motoring pressure Mp is excluded instead of the pressure change rate waveform Eg in which the first and second peaks EAp and EBp coincide (FIG. 13B) in a situation where the motoring pressure Mp is included (FIG. 11A).

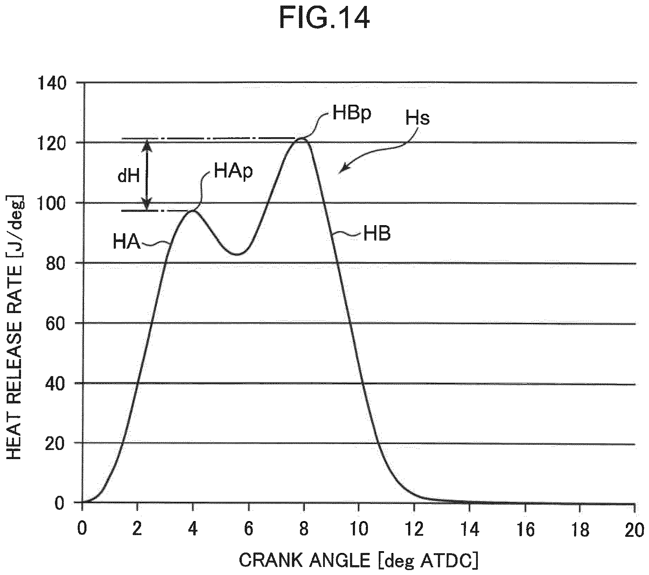

FIG. 14 is a graph showing a desirable target heat release rate characteristics Hs in a case where the pilot injection P1 (pre-injection) and the main injection P2 (post-injection) are executed. In the target heat release rate characteristic Hs, a value of the first peak HAp of the pre-combustion portion HA is set to a value smaller than a value of the second peak HBp of the post-combustion portion HB by a difference dH. This target heat release rate characteristic Hs is a heat release rate characteristic for obtaining the pressure change rate waveform Ef (HA: HB = 45 : 55) shown in FIG. 13B. The injection setting unit 75 sets a fuel injection amount or a fuel injection timing of the first pilot injection P11 so that the target heat release rate characteristic Hs is created in the combustion chamber 6 in each operation scene in the PCI range where the premixed compression ignition combustion is performed.

A fuel injection amount or a fuel injection timing by which the above target heat release rate characteristic Hs can be obtained fluctuates due to combustion environment factors, such as a wall surface temperature of the cylinder block 3, an in-cylinder pressure, an in-cylinder temperature, an in-cylinder oxygen concentration, an engine load, and the like. The correction unit 76 makes an adjustment so that combustion is always performed along the target heat release rate characteristic Hs by correcting the fuel injection amount or the fuel injection timing according to the combustion environment factor.

### [Control flow]

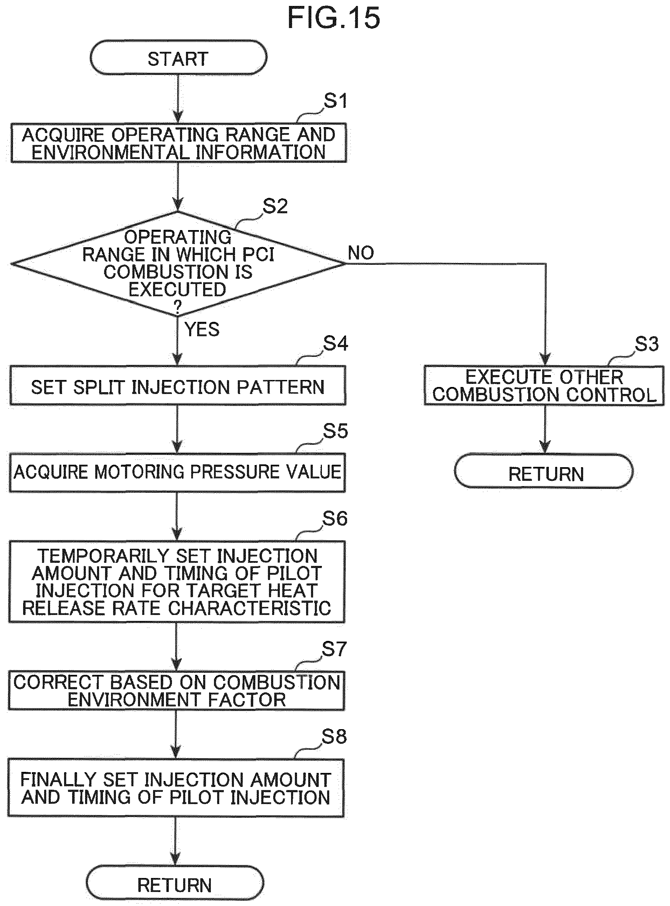

FIG. 15 is a flowchart showing an example of fuel injection control by the fuel injection control unit 71 (FIG. 7) of the processor 70. First, the fuel injection control unit 71 acquires information on an operation range of a vehicle (an operation state of the engine main body 1) and environmental information as the combustion environment factor from the sensors SN1 to SN12 shown in FIG. 7 and other sensors (in-cylinder pressure sensor, and the like) (Step S1).

Next, the operation state determination unit 72 determines whether or not a current operation range corresponds to the PCI range for executing premixed compression ignition combustion based on the information on the operation range acquired in Step S1 (Step S2). In a case where it does not correspond to the PCI range (NO in Step S2), the fuel injection control unit 71 executes other combustion control preset for an operation range other than the PCI range (Step S3). That is, the injection pattern selection unit 73 sets a fuel injection pattern for other combustion control.

On the other hand, in a case where it corresponds to the PCI range (YES in Step S2), the injection pattern selection unit 73 sets a split injection pattern including the pilot injection P1 (pre-injection) and the main injection P2 (post-injection) as exemplified in FIG. 5 (Step S4). Then, the motoring pressure acquisition unit 74 acquires a current value of the motoring pressure by applying a predetermined prediction formula or the like (Step S5). Alternatively, in a case where data in which the motoring pressure is associated with a crank angle is stored in the storage unit 77 in advance, the motoring pressure acquisition unit 74 acquires a value of the motoring pressure from the storage unit 77.

Next, the injection setting unit 75 temporarily sets a fuel injection amount or a fuel injection timing of the pilot injection P1 (the first pilot injection P11) (as a result, an ignition timing) so as to achieve the target heat release rate characteristic Hs as exemplified in FIG. 14 (Step S6). At this time, the injection setting unit 75 subtracts the motoring pressure obtained in Step S5 from combustion pressure to calculate the first peak EAp and the second peak EBp. As described above, combustion associated with the main injection P2, which is the post-injection, is highly robust combustion if a mode of the pilot injection P1, which is the pre-injection, is determined. Therefore, here, a fuel injection amount or a fuel injection timing of the pilot injection P1 is set proactively. In accordance with this, a fuel injection amount or a fuel injection timing of the main injection P2 is appropriately set.

Next, the correction unit 76 corrects a fuel injection amount or a fuel injection timing temporarily set in Step S6 based on environmental information (combustion environment factor) acquired in Step S1 by using a predetermined prediction model equation or the like (Step S7). For example, in a case where a peak value of the first peak HAp in the pre-combustion portion HA is predicted to be larger or smaller than a peak value in the target heat release rate characteristic Hs, correction is performed to reduce or increase a fuel injection amount. Further, in a case where a generation timing of the first peak HAp is predicted to be later or earlier than a generation timing in the target heat release rate characteristic Hs, correction for advancing or retarding a fuel injection timing is performed. As a matter of course, if a combustion environment factor is within a predetermined center range that does not require correction, that is, if a difference between the first peak HAp and the second peak HBp is within the allowable difference range, the correction operation by the correction unit 76 is not performed.

After the above, the injection setting unit 75 finally sets a fuel injection amount and a fuel injection timing of the first pilot injection P11 corrected in Step S7, the second pilot injection P12, and the main injection P2 (step S8). Then, the injection setting unit 75 controls the injector 15 as the above setting to execute fuel injection.

### [Function and effect]

According to the fuel injection control device for a diesel engine according to the present embodiment described above, the injection setting unit 75 performs control to contain a difference between the first peak EAp of combustion pressure accompanying the pilot injection P1 (pre-injection) and the second peak EBp of combustion pressure accompanying with the main injection P2 (post-injection) within a predetermined range. Therefore, it is possible to suppress increase in combustion noise due to any one of the first and second peaks EAp and EBp becoming outstanding. On the other hand, the motoring pressure Mp is generated in the combustion chamber 6 regardless of combustion or non-combustion. That is, an in-cylinder pressure of the combustion chamber 6 is a pressure obtained by superimposing the motoring pressure Mp on combustion pressure accompanying the pre-injection and the post-injection. Therefore, values detected or estimated as the first and second peaks EAp and EBp are actually values obtained by adding the motoring pressure Mp.

As shown in FIG. 12B, a pressure wave generated by the motoring pressure Mp is mainly composed of low frequency components that do not contribute to combustion noise, such as a diesel knocking sound. Therefore, by causing the injection setting unit 75 to calculate the first and second peaks EAp and EBp in an increase rate of combustion pressure by excluding the motoring pressure Mp, values of the first and second peaks EAp and EBp used as targets (the first and second peaks HAp and HBp in the heat release rate characteristic H) can be derived with high accuracy. Further, by causing the injection setting unit 75 to set a fuel injection amount or a fuel injection timing so as to reduce a difference between values of the highly-accurate first and second peaks EAp and EBp based on both of the values, combustion noise can be suppressed precisely.

Further, a peak interval between the first peak EAp and the second peak EBp is set to an interval at which an amplitude of a pressure wave due to fuel combustion of the pilot injection P1 and an amplitude of a pressure wave due to fuel combustion of the main injection P2 cancel each other. In this manner, pressure waves generated by the pilot injection P1 and the main injection P2 can cancel each other. In this manner, combustion noises generated by the pilot injection P1 and the main injection P2 cancel each other, and the combustion noise can be suppressed to an extremely low level.

### [Variation]

Although the embodiment of the present invention has been described above, the present invention is not limited to the above, and, for example, a variation as described below can be employed.
(1) In the above embodiment, an example in which the pilot injection P1 and the main injection P2 are executed is shown as a fuel injection pattern. This is an example and may be accompanied by other injections. For example, after the main injection P2, after-injection may be performed to suppress generation of soot. Further, the above embodiment shows an example in which the pilot injection P1 (pre-injection) is executed two times separately in the first pilot injection P11 and the second pilot injection P12. Instead of the above, the pilot injection P1 may be a single injection or three or more injections.
(2) The above embodiment shows an example in which the cavity 5C of the piston 5 that defines the bottom surface of the combustion chamber 6 has a two-stage egg shape including the first cavity portion 51 and the second cavity portion 52. The fuel injection control of the present invention is also applicable to a case where the piston 5 includes the cavity 5C having a hollow shape other than the two-stage egg shape.

Note that the specific embodiment described above discloses a fuel injection control device and control method of a diesel engine having a configuration described below.

A fuel injection control device for a diesel engine according to the present invention is a fuel injection control device for a diesel engine including a fuel injection valve that injects fuel into a combustion chamber, and a fuel injection control unit that controls operation of the fuel injection valve. The fuel injection control unit includes a split injection control unit that causes the fuel injection valve to execute pre-injection for injecting fuel at a predetermined first timing, and post-injection for injecting fuel at a second timing later than the pre-injection, a setting unit that sets a fuel injection amount or a fuel injection timing in the pre-injection or the post-injection so that a difference between a first peak, which is a peak of an increase rate of combustion pressure in the combustion chamber accompanying the pre-injection, and a second peak, which is a peak of an increase rate of combustion pressure in the combustion chamber accompanying the post-injection, falls within a predetermined range, and a calculation unit that calculates the first and second peaks in the increase rates of the combustion pressures by excluding motoring pressure, which is an in-cylinder pressure at a time of non-combustion of the combustion chamber.

According to this fuel injection control device, by controlling a difference between the first peak and the second peak to fall within a predetermined range, that any one of the first and second peaks becomes outstanding, which results in increase in combustion noise, can be suppressed. On the other hand, motoring pressure is generated in the combustion chamber regardless of combustion or non-combustion. That is, an in-cylinder pressure of the combustion chamber is a pressure obtained by superimposing the motoring pressure on combustion pressure accompanying the pre-injection and the post-injection. Therefore, values detected or estimated as the first and second peaks are actually values obtained by adding the motoring pressure. According to the study made by the inventors of the present invention, a pressure wave generated by the motoring pressure is mainly composed of low frequency components that do not contribute to combustion noise, such as a diesel knocking sound. In view of these points, by causing the calculation unit to calculate the first and second peaks in an increase rate of combustion pressure by excluding the motoring pressure, values of the first and second peaks used as targets can be derived with high accuracy. Further, by causing the setting unit to set a fuel injection amount or a fuel injection timing so as to reduce a difference between values of highly-accurate values of the first and second peaks based on both of the values, combustion noise can be suppressed precisely.

In the fuel injection control device described above, it is desirable that the setting unit set the fuel injection amount or the fuel injection timing so that an interval between a time at which the first peak occurs and a time at which the second peak occurs is an interval at which an amplitude of a pressure wave due to combustion of fuel in the pre-injection and an amplitude of a pressure wave due to combustion of fuel in the post-injection cancel each other.

By setting a peak interval between the first peak and the second peak as described above, it is possible to make a pressure wave (sound wave) accompanying the pre-injection and a pressure wave accompanying the post-injection cancel each other. In this manner, combustion noises generated by the pre-injection and the post-injection cancel each other, and the combustion noise can be suppressed to an extremely low level.

In the above-described fuel injection control device, it is desirable that the split injection control unit cause the post-injection to be executed as main injection where the second timing is near a compression top dead center, and cause the pre-injection to be executed as pilot injection where the first timing is earlier than the main injection.

By causing the pre-injection to be executed as the pilot injection and the post-injection to be executed as the main injection, torque can be efficiently generated while shortening of a combustion period and suppression of soot are achieved.

In this case, it is desirable that the setting unit change the fuel injection amount or the fuel injection timing of the pilot injection to make a difference between the first peak and the second peak fall within a predetermined range.

In a case where fuel injection is performed by being divided into the pre-injection and the post-injection, an ignition timing and the like are determined exclusively based on an execution situation of the pre-injection. If a mode of the pre-injection is defined, combustion accompanying the post-injection will be a relatively robust combustion. Therefore, by appropriately changing the fuel injection amount or the fuel injection timing of the pilot injection, which is the pre-injection, it is possible to precisely perform the control to make a difference between the first and second peaks fall within a predetermined range. Note that if a mode (injection amount and injection timing) of the post-injection is changed proactively, an entire combustion period may be shifted, which may affect the fuel efficiency and torque.

In the above-described fuel injection control device, it is desirable that a portion of the combustion chamber be defined by a crown surface of a piston, and the crown surface of the piston be provided with a cavity, the cavity include a first cavity portion disposed in a radial center region of the crown surface and including a first bottom portion having a first depth in a cylinder axial direction, a second cavity portion disposed on an outer peripheral side of the first cavity portion on the crown surface and including a second bottom portion having a depth shallower than the first depth in a cylinder axial direction, and a connecting portion that connects the first cavity portion and the second cavity portion, the fuel injection valve inject fuel toward the cavity, and be disposed at or near a radial center of the combustion chamber, and the split injection control unit set the first timing such that fuel injection by the pilot injection is directed to the connecting portion.

According to this fuel injection control device, fuel injection of the pilot injection is executed toward the connecting portion. Accordingly, an air utilization rate in the combustion chamber can be increased. That is, when fuel is injected from the fuel injection valve toward the cavity, a mixture of the fuel and air in the combustion chamber is directed to the first bottom portion and the second bottom portion. Therefore, the air-fuel mixture can be easily directed to radially inner side and outer side of the combustion chamber, air in the combustion chamber can be effectively used to form a homogeneous thin air-fuel mixture, and generation of soot can be suppressed.

In this case, it is desirable that the cavity further include a rising wall region disposed on a radially outer side relative to the second bottom portion of the second cavity portion, the second bottom portion be located below an upper end portion in a cylinder axial direction of the connecting portion, and a lower portion of the rising wall region be located on a radially inner side relative to an upper end position of the rising wall region.

With the formation of the rising wall region, a structure in which the air-fuel mixture cannot easily reach an outer peripheral wall (generally, a cylinder inner peripheral wall) of the combustion chamber can be obtained, and cooling loss can be reduced. Furthermore, the lower portion of the rising wall region has a structure located on a radially inner side with respect to an upper end position of the rising wall region. In this manner, an air-fuel mixture can be prevented from returning too much to a radially inner side of the combustion chamber, and combustion can be performed by effectively utilizing space (squish space) on a radially outer side than the rising wall region.

In the above-described fuel injection control device, it is desirable that the fuel injection control device further includes a storage unit that stores in advance data obtained by associating motoring pressure, which is an in-cylinder pressure at a time of non-combustion of the combustion chamber, with a crank angle, and a calculation unit that calculates the first and second peaks in an increase rate of the combustion pressure by subtracting motoring pressure stored in the storage unit from the combustion pressure.

A fuel injection control method for a diesel engine according to still another aspect of the present invention is a method of controlling fuel injection operation of a diesel engine system including a fuel injection valve that injects fuel into a combustion chamber, a fuel injection control unit that controls operation of the fuel injection valve, and a storage unit. The method includes a step of causing the fuel injection valve to execute pre-injection for injecting fuel at a predetermined first timing, and post-injection for injecting fuel at a second timing later than the pre-injection, a step of setting a fuel injection amount or a fuel injection timing in the pre-injection or the post-injection so that a difference between a first peak which is a peak of an increase rate of combustion pressure in the combustion chamber accompanying the pre-injection, and a second peak which is a peak of an increase rate of combustion pressure in the combustion chamber accompanying the post-injection, falls within a predetermined range, and a step of calculating the first and second peaks in an increase rate of the combustion pressure by subtracting motoring pressure from the combustion pressure. The motoring pressure is an in-cylinder pressure at the time of non-combustion of the combustion chamber, and the motoring pressure is stored in advance in the storage unit as data associated with a crank angle.

According to these control devices and control method, by causing the first and second peaks to be calculated by excluding the motoring pressure, values of the first and second peaks used as targets can be derived with high accuracy. Further, since the fuel injection amount or the fuel injection timing is set based on the highly-accurate values of the first and second peaks so that a difference between the two values falls within a predetermined range, combustion noise can be precisely suppressed.

According to the present invention described above, the fuel injection control device for a diesel engine that performs fuel injection into the combustion chamber by pre-injection and post-injection during one cycle, and can suppress fuel noise as much as possible can be provided.

This application is based on Japanese Patent application No. 2018-128990 filed in Japan Patent Office on July 6, 2018, the contents of which are hereby incorporated by reference.

Although the present invention has been fully described by way of example with reference to the accompanying drawings, it is to be understood that various changes and modifications will be apparent to those skilled in the art. The scope of protection is defined by the appended claims.

## Claims

1. A fuel injection control device (70) for a diesel engine, the fuel injection control device comprising:
a fuel injection valve (15) that injects fuel into a combustion chamber (6); and
a fuel injection control unit (71) that controls operation of the fuel injection valve,
wherein the fuel injection control unit (71) includes
a split injection control unit (73) that causes the fuel injection valve (15) to execute pre-injection (P1) for injecting fuel at a predetermined first timing, and post-injection (P2) for injecting fuel at a second timing later than the pre-injection,
a setting unit (75) that sets a fuel injection amount or a fuel injection timing in the pre-injection (P1) or the post-injection (P2) so that a value difference between a value of a first peak (EAp), which is a peak of an increase rate of combustion pressure in the combustion chamber accompanying the pre-injection, and a value of a second peak (EBp), which is a peak of an increase rate of combustion pressure in the combustion chamber accompanying the post-injection (P2), falls within a predetermined range, and
a calculation unit (75) that calculates the first and second peaks (EAp, EBp) in an increase rate of the combustion pressure by excluding motoring pressure (Mp), which is an in-cylinder pressure at a time of non-combustion of the combustion chamber.

2. The fuel injection control device (70) for a diesel engine according to claim 1, wherein the setting unit (75) sets the fuel injection amount or the fuel injection timing so that an interval between a time at which the first peak (EAp) occurs and a time at which the second peak (EBp) occurs is an interval at which an amplitude of a pressure wave due to combustion of fuel in the pre-injection and an amplitude of a pressure wave due to combustion of fuel in the post-injection cancel each other.

3. The fuel injection control device for a diesel engine according to claim 1 or 2, wherein the split injection control unit (73) causes the post-injection to be executed as main injection (P2) where the second timing is near a compression top dead center, and causes the pre-injection to be executed as pilot injection (P1) where the first timing is earlier than the main injection.

4. The fuel injection control device (70) for a diesel engine according to claim 3, wherein the setting unit (75) changes the fuel injection amount or the fuel injection timing of the pilot injection (P1) to make a value difference between the value of the first peak (EAp) and the value of the second peak (EBp) fall within a predetermined range.

5. The fuel injection control device for a diesel engine according to claim 3 or 4, wherein
a portion of the combustion chamber is defined by a crown surface (50) of a piston (5), and the crown surface of the piston is provided with a cavity (5C),
the cavity includes
a first cavity portion (51) disposed in a radial center region of the crown surface and including a first bottom portion (512) having a first depth in a cylinder axial direction,
a second cavity portion (52) disposed on an outer peripheral side of the first cavity portion on the crown surface and including a second bottom portion (522) having a depth shallower than the first depth in a cylinder axial direction, and
a connecting portion (53) that connects the first cavity portion and the second cavity portion,
the fuel injection valve (15) injects fuel toward the cavity (5C), and is disposed at or near a radial center of the combustion chamber, and
the split injection control unit (73) sets the first timing such that fuel injection by the pilot injection (P1) is directed to the connecting portion (53).

6. The fuel injection control device for a diesel engine according to claim 5, wherein
the cavity (5C) further includes a rising wall region (525) disposed on a radially outer side relative to the second bottom portion (522) of the second cavity portion (52),
the second bottom portion (522) is located below an upper end portion in a cylinder axial direction of the connecting portion (53), and
a lower portion of the rising wall region is located on a radially inner side relative to an upper end position of the rising wall region (525).

7. The fuel injection control device (70) for a diesel engine according to claim 1, further comprising:
a storage unit (77) that stores in advance data obtained by associating motoring pressure (Mp), which is an in-cylinder pressure at a time of non-combustion of the combustion chamber, with a crank angle,
wherein the calculation unit (75) calculates the values of the first and second peaks (Map, MBp) in an increase rate of the combustion pressure by subtracting motoring pressure (Mp) stored in the storage unit from the combustion pressure.

8. A method of controlling fuel injection operation for a diesel engine system including a fuel injection valve (15) that injects fuel into a combustion chamber (6), a fuel injection control unit (71) that controls operation of the fuel injection valve, and a storage unit (77), the method comprising:
causing the fuel injection valve (15) to execute pre-injection (P1) for injecting fuel at a predetermined first timing, and post-injection (P2) for injecting fuel at a second timing later than the pre-injection;
setting a fuel injection amount or a fuel injection timing in the pre-injection or the post-injection so that a value difference between a value of a first peak (MAp), which is a peak of an increase rate of combustion pressure in the combustion chamber accompanying the pre-injection, and a value of a second peak (MBp), which is a peak of an increase rate of combustion pressure in the combustion chamber accompanying the post-injection, falls within a predetermined range; and
calculating the first and second peaks in an increase rate of the combustion pressure by subtracting motoring pressure (Mp) from the combustion pressure,
wherein the motoring pressure is an in-cylinder pressure at a time of non-combustion of the combustion chamber, and the motoring pressure is stored in the storage unit (77) in advance as data associated with a crank angle.

## Patentansprüche

1. Kraftstoffeinspritzsteuerungs- bzw. -regelungsvorrichtung (70) für einen Dieselmotor, wobei die Kraftstoffeinspritzsteuerungs- bzw. -regelungsvorrichtung umfasst:
ein Kraftstoffeinspritzventil (15), das Kraftstoff in einen Brennraum (6) einspritzt; und
eine Kraftstoffeinspritzsteuerungs- bzw. -regelungseinheit (71), die den Betrieb des Kraftstoffeinspritzventils steuert bzw. regelt,
wobei die Kraftstoffeinspritzsteuerungs- bzw. -regelungseinheit (71) enthält eine Teileinspritzungssteuerungs- bzw. -regelungseinheit (73), die bewirkt, dass das Kraftstoffeinspritzventil (15) eine Voreinspritzung (P1) zum Einspritzen von Kraftstoff zu einem vorbestimmten ersten Zeitpunkt und eine Nacheinspritzung (P2) zum Einspritzen von Kraftstoff zu einem zweiten Zeitpunkt später als die Voreinspritzung ausführt,
eine Einstelleinheit (75), die eine Kraftstoffeinspritzmenge oder einen Kraftstoffeinspritzzeitpunkt in der Voreinspritzung (P1) oder der Nacheinspritzung (P2) so einstellt, dass eine Wertdifferenz zwischen einem Wert einer ersten Spitze (EAp), die eine Spitze einer Anstiegsrate des Verbrennungsdrucks in dem Brennraum ist, der mit der Voreinspritzung einhergeht, und einem Wert einer zweiten Spitze (EBp), die eine Spitze einer Anstiegsrate des Verbrennungsdrucks in dem Brennraum ist, der mit der Nacheinspritzung (P2) einhergeht, in einen vorbestimmten Bereich fällt, und
eine Berechnungseinheit (75), welche die erste und zweite Spitze (EAp, EBp) bei einer Anstiegsrate des Verbrennungsdrucks berechnet, indem der Motordruck (Mp) ausgenommen wird, der ein Zylinderinnendruck zu einem Zeitpunkt einer Nichtverbrennung des Brennraums ist.

2. Kraftstoffeinspritzsteuerungs- bzw. -regelungsvorrichtung (70) für einen Dieselmotor nach Anspruch 1, wobei die Einstelleinheit (75) die Kraftstoffeinspritzmenge oder den Kraftstoffeinspritzzeitpunkt so einstellt, dass ein Intervall zwischen einem Zeitpunkt, zu dem die erste Spitze (EAp) auftritt, und einem Zeitpunkt, zu dem die zweite Spitze (EBp) auftritt, ein Intervall ist, in dem sich eine Amplitude einer Druckwelle aufgrund einer Verbrennung von Kraftstoff in der Voreinspritzung und eine Amplitude einer Druckwelle aufgrund einer Verbrennung von Kraftstoff in der Nacheinspritzung gegenseitig aufheben.

3. Kraftstoffeinspritzsteuerungs- bzw. -regelungsvorrichtung für einen Dieselmotor nach Anspruch 1 oder 2, wobei die Teileinspritzungssteuerungs- bzw. - regelungseinheit (73) bewirkt, dass die Nacheinspritzung als Haupteinspritzung (P2) ausgeführt wird, wobei der zweite Zeitpunkt nahe einem oberen Verbrennungstotpunkt ist, und bewirkt, dass die Voreinspritzung als Piloteinspritzung (P1) ausgeführt wird, wobei der erste Zeitpunkt früher als die Haupteinspritzung ist.

4. Kraftstoffeinspritzsteuerungs- bzw. -regelungsvorrichtung (70) für einen Dieselmotor nach Anspruch 3, wobei die Einstelleinheit (75) die Kraftstoffeinspritzmenge oder den Kraftstoffeinspritzzeitpunkt der Piloteinspritzung (P1) ändert, um einen Wertunterschied zwischen dem Wert der ersten Spitze (EAp) und dem Wert der zweiten Spitze (EBp) in einen vorbestimmten Bereich fallen zu lassen.

5. Kraftstoffeinspritzsteuerungs- bzw. -regelungsvorrichtung für einen Dieselmotor nach Anspruch 3 oder 4, wobei
ein Abschnitt des Brennraums durch eine Kronenfläche bzw. -oberfläche (50) eines Kolbens (5) definiert ist und die Kronenfläche des Kolbens mit einem Hohlraum (5C) versehen ist,
wobei der Hohlraum enthält
einen ersten Hohlraumabschnitt (51), der in einem radialen Mittelbereich der Kronenfläche angeordnet ist und einen ersten Bodenabschnitt (512) mit einer ersten Tiefe in einer Zylinderaxialrichtung enthält;
einen zweiten Hohlraumabschnitt (52), der an einer Außenumfangsseite des ersten Hohlraumabschnitts an der Kronenfläche angeordnet ist und einen zweiten Bodenabschnitt (522) mit einer Tiefe, die flacher als die erste Tiefe ist, in einer Zylinderaxialrichtung aufweist, und
einen Verbindungsabschnitt (53), der den ersten Hohlraumabschnitt und den zweiten Hohlraumabschnitt verbindet,
das Kraftstoffeinspritzventil (15) Kraftstoff in Richtung des Hohlraums (5C) einspritzt und an oder nahe einer radialen Mitte des Brennraums angeordnet ist, und
die Teileinspritzungssteuerungs- bzw. -regelungseinheit (73) den ersten Zeitpunkt so einstellt, dass die Kraftstoffeinspritzung durch die Piloteinspritzung (P1) auf den Verbindungsabschnitt (53) gerichtet ist.

6. Kraftstoffeinspritzsteuerungs- bzw. -regelungsvorrichtung für einen Dieselmotor nach Anspruch 5, wobei
der Hohlraum (5C) ferner einen Anstiegswandbereich (525) enthält, der auf einer radial äußeren Seite relativ zu dem zweiten Bodenabschnitt (522) des zweiten Hohlraumabschnitts (52) angeordnet ist;
sich der zweite untere Abschnitt (522) unterhalb eines oberen Endabschnitts in einer Zylinderaxialrichtung des Verbindungsabschnitts (53) befindet, und
sich ein unterer Abschnitt des Anstiegswandbereichs auf einer radial inneren Seite relativ zu einer oberen Endposition des Anstiegswandbereichs (525) befindet.

7. Kraftstoffeinspritzsteuerungs- bzw. -regelungsvorrichtung (70) für einen Dieselmotor nach Anspruch 1, ferner umfassend:
eine Speichereinheit (77), die im Voraus Daten speichert, die durch Verknüpfen von Motordruck (Mp), der ein Zylinderdruck zu einem Zeitpunkt der Nichtverbrennung des Brennraums ist, mit einem Kurbelwinkel erhalten werden;
wobei die Berechnungseinheit (75) die Werte der ersten und zweiten Spitze (Map, MBp) bei einer Anstiegsrate des Verbrennungsdrucks berechnet, indem der in der Speichereinheit gespeicherte Motordruck (Mp) von dem Verbrennungsdruck subtrahiert wird.

8. Verfahren zum Steuern bzw. Regel des Kraftstoffeinspritzvorgangs für ein Dieselmotorsystem, das ein Kraftstoffeinspritzventil (15), das Kraftstoff in einen Brennraum (6) einspritzt, eine Kraftstoffeinspritzsteuerungs- bzw. - regelungseinheit (71), die den Betrieb des Kraftstoffeinspritzventils steuert bzw. regelt, und eine Speichereinheit (77) enthält, wobei das Verfahren umfasst:
Veranlassen des Kraftstoffeinspritzventils (15), eine Voreinspritzung (P1) zum Einspritzen von Kraftstoff zu einem vorbestimmten ersten Zeitpunkt und eine Nacheinspritzung (P2) zum Einspritzen von Kraftstoff zu einem zweiten Zeitpunkt später als die Voreinspritzung auszuführen;
Einstellen einer Kraftstoffeinspritzmenge oder eines Kraftstoffeinspritzzeitpunkts bei der Voreinspritzung oder der Nacheinspritzung, so dass eine Wertdifferenz zwischen einem Wert einer ersten Spitze (MAp), die eine Spitze einer Anstiegsrate des Verbrennungsdrucks in dem Brennraum ist, der mit der Voreinspritzung einhergeht, und einem Wert einer zweiten Spitze (MBp), die eine Spitze einer Anstiegsrate des Verbrennungsdrucks in dem Brennraum ist, der mit der Nacheinspritzung (P2) einhergeht, in einen vorbestimmten Bereich fällt; und
Berechnen der ersten und zweiten Spitze bei einer Anstiegsrate des Verbrennungsdrucks durch Subtrahieren des Motordrucks (Mp) von dem Verbrennungsdruck,
wobei der Motordruck ein Zylinderinnendruck zu einem Zeitpunkt einer Nichtverbrennung des Brennraums ist und der Motordruck im Vorhinein in der Speichereinheit (77) als Daten gespeichert wird, die mit einem Kurbelwinkel verknüpft sind.

## Revendications

1. Dispositif de commande d'injection de carburant (70) pour un moteur diesel, le dispositif de commande d'injection de carburant comprenant :
une soupape d'injection de carburant (15) qui injecte du carburant dans une chambre de combustion (6) ; et
un module de commande d'injection de carburant (71) qui commande l'opération de la soupape d'injection de carburant,
dans lequel le module de commande d'injection de carburant (71) inclut un module de commande d'injection séparée (73) qui amène la soupape d'injection de carburant (15) à exécuter une pré-injection (P1) pour injecter du carburant à un premier calage prédéterminé, et une post-injection (P2) pour injecter du carburant à un second calage ultérieur à la pré-injection,
un module de réglage (75) qui règle une quantité d'injection de carburant ou un calage d'injection de carburant dans la pré-injection (P1) ou la post-injection (P2) de sorte qu'une différence de valeur entre une valeur d'un premier pic (EAp), qui est un pic d'un taux d'augmentation de pression de combustion dans la chambre de combustion accompagnant la pré-injection, et une valeur d'un second pic (EBp), qui est un pic d'un taux d'augmentation de pression de combustion dans la chambre de combustion accompagnant la post-injection (P2), tombe au sein d'une plage prédéterminée, et
un module de calcul (75) qui calcule les premier et second pics (EAp, EBp) dans un taux d'augmentation de la pression de combustion en excluant de la pression de motorisation (Mp), qui est une pression dans le cylindre à un moment de non combustion de la chambre de combustion.

2. Dispositif de commande d'injection de carburant (70) pour un moteur diesel selon la revendication 1, dans lequel le module de réglage (75) règle la quantité d'injection de carburant ou le calage d'injection de carburant de sorte qu'un intervalle entre un moment auquel le premier pic (EAp) se produit et un moment auquel le second pic (EBp) se produit est un intervalle auquel une amplitude d'une onde de pression en raison de la combustion de carburant dans la pré-injection et une amplitude d'une onde de pression en raison de la combustion de carburant dans la post-injection s'annulent l'une l'autre.

3. Dispositif de commande d'injection de carburant pour un moteur diesel selon la revendication 1 ou 2, dans lequel le module de commande d'injection séparée (73) amène la post-injection à être exécutée comme injection principale (P2) où le second calage est proche d'un point mort haut de compression, et amène la pré-injection à être exécutée comme injection pilote (P1) où le premier calage est antérieur à l'injection principale.

4. Dispositif de commande d'injection de carburant (70) pour un moteur diesel selon la revendication 3, dans lequel le module de réglage (75) change la quantité d'injection de carburant ou le calage d'injection de carburant de l'injection pilote (P1) pour faire tomber une différence de valeur entre la valeur du premier pic (EAp) et la valeur du second pic (EBp) au sein d'une plage prédéterminée.

5. Dispositif de commande d'injection de carburant pour un moteur diesel selon la revendication 3 ou 4, dans lequel
une portion de la chambre de combustion est définie par une surface de couronne (50) d'un piston (5), et la surface de couronne du piston est pourvue d'une cavité (5C),
la cavité inclut
une première portion de cavité (51) disposée dans une région centrale radiale de la surface de couronne et incluant une première portion inférieure (512) ayant une première profondeur dans une direction axiale de cylindre,
une seconde portion de cavité (52) disposée sur un côté périphérique externe de la première portion de cavité sur la surface de couronne et incluant une seconde portion inférieure (522) ayant une profondeur moins profonde que la première profondeur dans une direction axiale de cylindre, et
une portion de connexion (53) qui connecte la première portion de cavité et la seconde portion de cavité,
la soupape d'injection de carburant (15) injecte du carburant vers la cavité (5C), et est disposée au niveau ou près d'un centre radial de la chambre de combustion, et
le module de commande d'injection séparée (73) règle le premier calage de sorte que l'injection de carburant par l'injection pilote (P1) est dirigée vers la portion de connexion (53).

6. Dispositif de commande d'injection de carburant pour un moteur diesel selon la revendication 5, dans lequel
la cavité (5C) inclut en outre une région de paroi montante (525) disposée sur un côté radialement externe par rapport à la seconde portion inférieure (522) de la seconde portion de cavité (52),
la seconde portion inférieure (522) est située en dessous d'une portion d'extrémité supérieure dans une direction axiale de cylindre de la portion de connexion (53), et
une portion inférieure de la région de paroi montante est située sur un côté radialement interne par rapport à une position d'extrémité supérieure de la région de paroi montante (525).

7. Dispositif de commande d'injection de carburant (70) pour un moteur diesel selon la revendication 1, comprenant en outre :
un module de stockage (77) qui stocke en avance des données obtenues en associant la pression de motorisation (Mp), qui est une pression dans le cylindre à un moment de non combustion de la chambre de combustion, à un angle de vilebrequin,
dans lequel le module de calcul (75) calcule les valeurs des premier et second pics (Map, MBp) dans un taux d'augmentation de la pression de combustion en soustrayant la pression de motorisation (Mp) stockée dans le module de stockage de la pression de combustion.

8. Procédé de commande d'une opération d'injection de carburant pour un système de moteur diesel incluant une soupape d'injection de carburant (15) qui injecte du carburant dans une chambre de combustion (6), un module de commande d'injection de carburant (71) qui commande l'opération de la soupape d'injection de carburant, et un module de stockage (77), le procédé comprenant :
amener la soupape d'injection de carburant (15) à exécuter une pré-injection (P1) pour injecter du carburant à un premier calage prédéterminé, et une post-injection (P2) pour injecter du carburant à un second calage ultérieur à la pré-injection ;
régler une quantité d'injection de carburant ou un calage d'injection de carburant dans la pré-injection ou la post-injection de sorte qu'une différence de valeur entre une valeur d'un premier pic (MAp), qui est un pic d'un taux d'augmentation de pression de combustion dans la chambre de combustion accompagnant la pré-injection, et une valeur d'un second pic (MBp), qui est un pic d'un taux d'augmentation de pression de combustion dans la chambre de combustion accompagnant la post-injection, tombe au sein d'une plage prédéterminée ; et
calculer les premier et second pics dans un taux d'augmentation de la pression de combustion en soustrayant la pression de motorisation (Mp) de la pression de combustion,
dans lequel la pression de motorisation est une pression dans le cylindre à un moment de non combustion de la chambre de combustion, et la pression de motorisation est stockée dans le module de stockage (77) en avance en tant que données associées à un angle de vilebrequin.
